(19) Europäisches Patentamt
European Patent Office
Office européen des brevets

(11) **EP 2 854 277 A2**

(12) **EUROPEAN PATENT APPLICATION**

(43) Date of publication:
**01.04.2015 Bulletin 2015/14**

(51) Int Cl.:
***H02M 5/297*** *(2006.01)*

(21) Application number: **14185505.6**

(22) Date of filing: **19.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.09.2013 JP 2013199990**

(71) Applicant: **Kabushiki Kaisha Yaskawa Denki Kitakyushu-shi, Fukuoka 806-0004 (JP)**

(72) Inventors:
• **Inomata, Kentaro**
  **Kitakyushu-shi, Fukuoka 806-0004 (JP)**
• **Morimoto, Shinya**
  **Kitakyushu-shi, Fukuoka 806-0004 (JP)**

(74) Representative: **Viering, Jentschura & Partner Patent- und Rechtsanwälte Grillparzerstrasse 14 81675 München (DE)**

(54) **Matrix converter**

(57)    A matrix converter includes a power conversion section and a control section. The power conversion section includes bidirectional switches each having a conducting direction controllable by switching elements. The bidirectional switches are disposed between input terminals coupled to phases of an AC power source and output terminals coupled to phases of a load. A first commutation control section performs commutation control based on a first commutation. A second commutation control section performs the commutation control based on a second commutation. A selection section selects between the first and second commutation control sections and to perform the commutation control based on a vector of an output current or an output voltage from the power conversion section or a vector of an input voltage or an input current from the AC power source to the power conversion section.

FIG. 1

**Description**

BACKGROUND

FIELD OF THE INVENTION

The present invention relates to a matrix converter.

DISCUSSION OF THE BACKGROUND

Matrix converters include a plurality of bidirectional switches that couple between an AC (alternating-current) power source and a load. The bidirectional switches are controlled to directly switch phase voltages of the AC power source so as to output a desired voltage and a desired frequency to the load.

In switching between the phases of the AC power source to be coupled to the load using a bidirectional switch, the matrix converters perform commutation, which is to individually control, in a predetermined order, switching elements constituting the bidirectional switch. This is for the purpose of preventing inter-input phase short-circuiting and opening of an output phase.

Known commutations include a commutation based on a current commutation method and a commutation based on a voltage commutation method. The current commutation method may involve a commutation failure such as opening of an output phase due to a delay of polarity switching or erroneous detection of current, which are caused when, for example, the output current is small. The voltage commutation method may involve a commutation failure such as inter-input phase short-circuiting due to a delay in switching of relationship in magnitude among input phase voltages or due to erroneous detection of voltage, which are caused when, for example, the difference in relationship in magnitude among the input phase voltages is small.

In view of this, Japanese Unexamined Patent Application Publication No. 2003-333851 discloses performing a commutation while switching from the current commutation method to the voltage commutation method or from the voltage commutation method to the current commutation method when an absolute value of the output current is small or when the difference in absolute value among the input phase voltages is small.

The contents of Japanese Unexamined Patent Application Publication No. 2003-333851 are incorporated herein by reference in their entirety.

Unfortunately, with the technique of switching between the commutation methods in accordance with the absolute value of the output current and the absolute value of the input voltage, it is necessary to eliminate the influence of a detection error of an absolute value and a delay of switching of polarity, for example. This involves an enlarged margin of switching level, leaving room for improvement in terms of accuracy in switching between the commutation methods.

One aspect of an embodiment has been made in view of the above-described circumstances, and it is an object of the present disclosure to provide a matrix converter capable of accurately commutation switching.

SUMMARY

According to one aspect of the present disclosure, a matrix converter includes a power conversion section and a control section. The power conversion section includes a plurality of bidirectional switches each having a conducting direction controllable by a plurality of switching elements. The plurality of bidirectional switches are disposed between a plurality of input terminals and a plurality of output terminals. The plurality of input terminals are respectively coupled to phases of an AC power source. The plurality of output terminals are respectively coupled to phases of a load. The control section is configured to control the plurality of bidirectional switches. The control section includes a first commutation control section, a second commutation control section, and a selection section. The first commutation control section is configured to perform commutation control based on a first commutation. The second commutation control section is configured to perform the commutation control based on a second commutation different from the first commutation. The selection section is configured to select between the first commutation control section and the second commutation control section to perform the commutation control based on a vector of an output current or a vector of an output voltage from the power conversion section or based on a vector of an input voltage or a vector of an input current from the AC power source to the power conversion section.

The one aspect of the embodiment provides a matrix converter capable of accurately commutation switching.

BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:

FIG. 1 is a diagram illustrating an exemplary configuration of a matrix converter according to a first embodiment;
FIG. 2 is a diagram illustrating an exemplary configuration of a bidirectional switch shown in FIG. 1;
FIG. 3 is a diagram illustrating an exemplary configuration of a control section shown in FIG. 1;
FIG. 4 is a diagram illustrating switching among input phase voltages output to output phases;
FIG. 5 illustrates a relationship between unidirectional switches of a plurality of bidirectional switches and gate signals;
FIG. 6A illustrates a relationship between the output phase voltage and the gate signals in a case where the output phase current is a positive value in a 4-step current commutation;
FIG. 6B illustrates a relationship between the output phase voltage and the gate signals in a case where the output phase current is a negative value in the 4-step current commutation;
FIG. 7 illustrates states of the unidirectional switches in the 4-step current commutation shown in FIG. 6A;
FIG. 8 illustrates a relationship among an output phase voltage, the gate signals, and steps in a commutation operation in a 4-step voltage commutation;
FIG. 9 illustrates states of the unidirectional switches in the 4-step voltage commutation shown in FIG. 8;
FIG. 10 illustrates a waveform of the output current;
FIG. 11 is a diagram illustrating a configuration of a selection section shown in FIG. 3;
FIG. 12 illustrates an exemplary output current vector;
FIG. 13 illustrates an exemplary predetermined range in a U phase in a case where Pa = 1;
FIG. 14A illustrates a conceptual relationship among an output phase current, a commutation selection cycle, and a selected commutation in a case where $\Delta\theta 1 = 0$;
FIG. 14B illustrates a conceptual relationship among the output phase current, the commutation selection cycle, and a selected commutation in a case where $\Delta\theta 1 > 0$;
FIG. 15 illustrates an exemplary predetermined range in the U phase in a case where Pa = 1;
FIG. 16 illustrates a conceptual relationship among the output phase current, the commutation selection cycle, and a selected commutation in a case where Pa = 2;
FIG. 17 illustrates an exemplary predetermined range in the U phase in a case where Pa = 3;
FIG. 18 illustrates an exemplary predetermined range in the U phase in a case where Pa = 4;
FIG. 19 illustrates an exemplary predetermined range in the U phase in a case where Pa = 5;
FIG. 20 illustrates an exemplary predetermined range in the U phase in a case where Pa = 6;
FIG. 21 illustrates an exemplary predetermined range in the U phase in a case where Pa = 7;
FIG. 22 illustrates a relationship between dependency on the polarity of the output current and commutation types;
FIG. 23A illustrates a relationship between the output phase voltage and the gate signals in a case where the output phase current is a positive value in a 1-step current commutation;
FIG. 23B illustrates a relationship between the output phase voltage and the gate signals in a case where the output phase current is a negative value in the 1-step current commutation;
FIG. 24A illustrates a relationship between the output phase voltage and the gate signals in a case where the output phase current is a positive value in a 2-step current commutation;
FIG. 24B illustrates a relationship between the output phase voltage and the gate signals in a case where the output phase current is a negative value in the 2-step current commutation;
FIG. 25A illustrates a relationship between the output phase voltage and the gate signals in a case where the output phase current is a positive value in a 3-step current commutation;
FIG. 25B illustrates a relationship between the output phase voltage and the gate signals in a case where the output phase current is a negative value in the 3-step current commutation;
FIG. 26A illustrates a relationship between the output phase voltage and the gate signals in a case where the output phase current is a positive value in a 3-step voltage and current commutation;
FIG. 26B illustrates a relationship between the output phase voltage and the gate signals in a case where the output phase current is a negative value in the 3-step voltage and current commutation;
FIG. 27A illustrates a relationship between the output phase voltage and the gate signals in a case where the output phase current is a positive value in a 3-step voltage commutation;
FIG. 27B illustrates a relationship between the output phase voltage and the gate signals in a case where the output phase current is a negative value in the 3-step voltage commutation;
FIG. 28 illustrates a relationship among the output phase voltage, the gate signals, and steps in a commutation operation in a 2-step voltage commutation;
FIG. 29 is a diagram illustrating an exemplary configuration of a matrix converter according to a second embodiment;
FIG. 30 is a diagram illustrating an exemplary configuration of a matrix converter according to a third embodiment;
FIG. 31 illustrates a relationship between an input voltage phase and a relationship in magnitude among input phase voltages; and
FIG. 32 is a diagram illustrating an exemplary configuration of a matrix converter according to a fourth embodiment.

DESCRIPTION OF THE EMBODIMENTS

The embodiments will now be described with reference to the accompanying drawings, wherein like reference numerals designate corresponding or identical elements throughout the various drawings.

<<1. First embodiment>>

<<1.1. Configuration of matrix converter>>

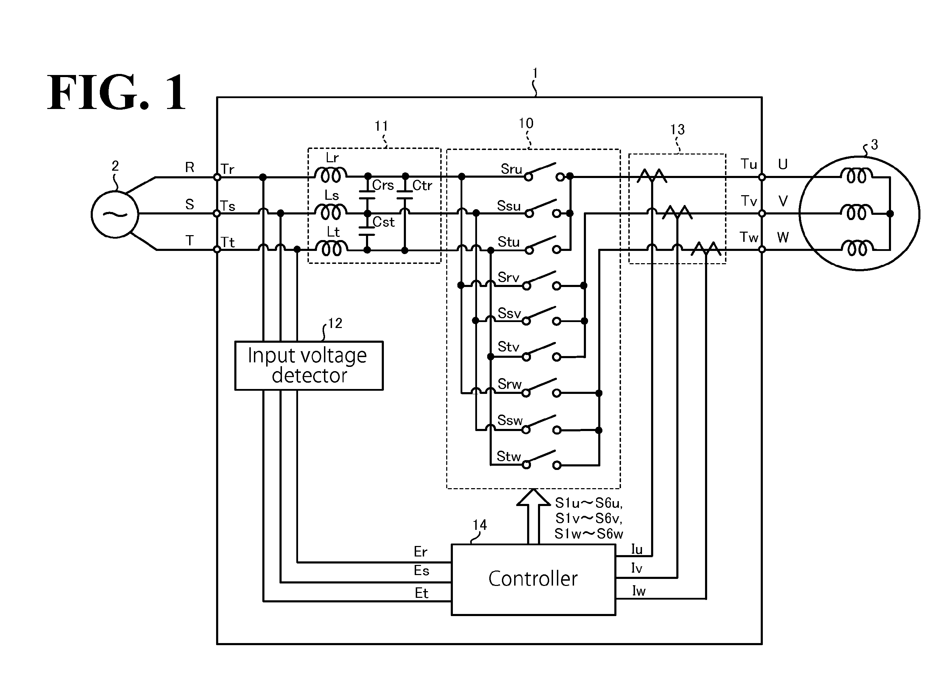

FIG. 1 is a diagram illustrating an exemplary configuration of a matrix converter according to a first embodiment. As shown in FIG. 1, a matrix converter 1 according to the first embodiment is disposed between a three-phase AC power source 2 (hereinafter simply referred to as AC power source 2) and a load 3. An example of the load 3 is an AC motor. In the following description, an R phase, an S phase, and a T phase of the AC power source 2 will be referred to as input phases, while a U phase, a V phase, and a W phase of the load 3 will be referred to as output phases.
The matrix converter 1 includes input terminals Tr, Ys, and Tt, output terminals Tu, Tv, and Tw, a power conversion section 10, an LC filter 11, an input voltage detection section 12, an output current detection section 13, and a control section 14. The AC power source 2 supplies three-phase AC power to the matrix converter 1 through the input terminals Tr, Ts, and Tt. The matrix converter 1 converts the three-phase AC power into three-phase AC power of a desired voltage and a desired frequency. Then, the matrix converter 1 outputs the resulting three-phase AC power to the load 3 through the output terminals Tu, Tv, and Tw.
The power conversion section 10 includes a plurality of bidirectional switches, namely, Sru, Ssu, Stu, Srv, Ssv, Stv, Srw, Ssw, and Stw (hereinafter occasionally collectively referred to as bidirectional switch S). The plurality of bidirectional switches couple the phases of the AC power source 2 to the corresponding phases of the load 3.
The bidirectional switches Sru, Ssu, and Stu respectively couple the R, S, and T phases of the AC power source 2 to the U phase of the load 3. The bidirectional switches Srv, Ssv, and Stv respectively couple the R, S, and T phases of the AC power source 2 to the V phase of the load 3. The bidirectional switches Srw, Ssw, and Stw respectively couple the R, S, and T phases of the AC power source 2 to the W phase of the load 3.

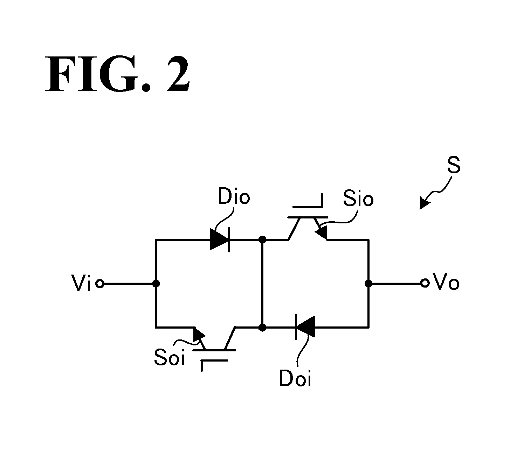

FIG. 2 is a diagram illustrating an exemplary configuration of the bidirectional switch S. As shown in FIG. 2, the bidirectional switch S includes a circuit in which a unidirectional switch Sio and a diode Dio are coupled to each other in series, and another circuit in which a unidirectional switch Soi and a diode Doi are coupled to each other in series. These circuits are anti-parallelly connected to each other. The bidirectional switch S will not be limited to the configuration shown in FIG. 2; any other configuration is possible insofar as the bidirectional switch S has a conducting direction controllable by a plurality of unidirectional switches. For example, while in the example shown in FIG. 2 the cathodes of the diodes Dio and Doi are coupled to each other, the bidirectional switch S may have a configuration in which the cathodes of the diodes Dio and Doi are not coupled to each other.
Examples of the unidirectional switches Sio and Soi include, but are not limited to, semiconductor switching elements such as metal-oxide-semiconductor field-effect transistor (MOSFET) and insulated gate bipolar transistor (IGBT). Other examples include next generation semiconductor switching elements such as SiC and GaN.
Referring back to FIG. 1, the matrix converter 1 will be further described. The LC filter 11 is disposed between the power conversion section 10 and the R, S, and T phases of the AC power source 2. Specifically, the LC filter 11 includes three reactors Lr, Ls, and Lt and three capacitors Crs, Cst, and Ctr, and removes high frequency components resulting from switching of the bidirectional switch S.
The input voltage detection section 12 detects the phase voltage of each of the R, S and T phases of the AC power source 2. Specifically, the input voltage detection section 12 detects instantaneous values Er, Es, and Et (hereinafter referred to as input phase voltages Er, Es, and Et) respectively of the phase voltages of the R, S, and T phases of the AC power source 2. The phase voltages of the R, S, and T phases of the AC power source 2 may be occasionally collectively referred to as input voltage Vi.
The output current detection section 13 detects the current flowing between the power conversion section 10 and the load 3. Specifically, the output current detection section 13 detects instantaneous values Iu, Iv, and Iw (hereinafter referred to as output phase currents Iu, Iv, and Iw) of the currents flowing between the power conversion section 10 and the U, V, and W phases of the load 3. In the following description, the output phase currents Iu, Iv, and Iw may be occasionally collectively referred to as output current Io. Also, instantaneous values of the voltages respectively output to the U, V, and W phases of the load 3 from the power conversion section 10 may be occasionally referred to as output phase voltages Vu, Vv, and Vw. The phase voltages respectively output to the U, V, and W phases of the load 3 from the power conversion section 10 may be occasionally collectively referred to as output voltage Vo.

The control section 14 generates gate signals S1u to S6u, S1v to S6v, and S1w to S6w based on the input phase voltages Er, Es, and Et and based on the output phase currents Iu, Iv, and Iw. In the following description, the gate signals S1u to S6u, S1v to S6v, and S1w to S6w may be occasionally collectively referred to as gate signal Sg.

As described later, the control section 14 switches between commutation methods based on a vector of the output current Io. This ensures accurate switching between the commutation methods. The commutation operation will be described in detail below. «1.2. Configuration of the control section 14»

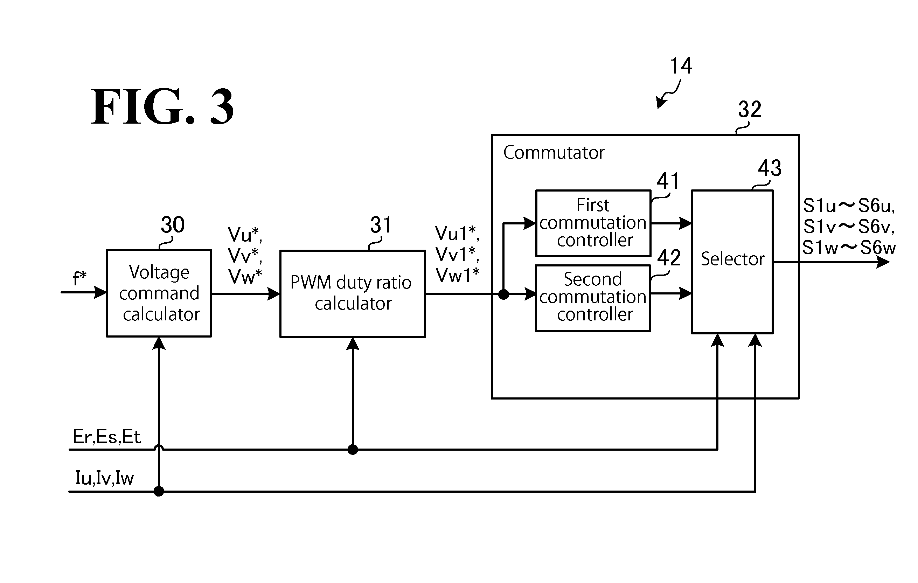

FIG. 3 is a diagram illustrating an exemplary configuration of the control section 14. As shown in FIG. 3, the control section 14 includes a voltage command calculation section 30, a PWM duty ratio calculation section 31, and a commutation section 32.

The control section 14 includes a microcomputer and various circuits. The microcomputer includes a central processing unit (CPU), a read only memory (ROM), a random access memory (RAM), and an input-output port. The CPU of the microcomputer reads and executes a program stored in the ROM to function as the voltage command calculation section 30, the PWM duty ratio calculation section 31, and the commutation section 32. It is possible to implement the control section 14 using hardware alone, without using any programs.

<<1.3. Voltage command calculation section 30>>

Based on a frequency command f* and the output phase currents Iu, Iv, and Iw, the voltage command calculation section 30 generates voltage commands Vu*, Vv*, and Vw* (hereinafter occasionally collectively referred to as voltage command Vo*) for the respective output phases. Then, the voltage command calculation section 30 outputs the voltage commands Vu*, Vv*, and Vw*. The frequency command f* is a command associated with the frequencies of the output phase voltages Vu, Vv, and Vw.

<<1.4. PWM duty ratio calculation section 31>>

Based on the voltage commands Vu*, Vv*, and Vw* and based on the input phase voltages Er, Es, and Et, the PWM duty ratio calculation section 31 generates PWM voltage commands Vu1*, Vv1*, and Vw1*. It is possible to use any known technique to generate the PWM voltage commands Vu1*, Vv1*, and Vw1*. Exemplary techniques are described in Japanese Unexamined Patent Application Publication No. 2008-048550 and Japanese Unexamined Patent Application Publication No. 2012-239265.

For example, during a period of unchanging relationship in magnitude among the input phase voltages Er, Es, and Et, the PWM duty ratio calculation section 31 makes the input phase voltages Er, Es, and Et into input phase voltages Ep, Em, and En in descending order. Then, the PWM duty ratio calculation section 31 converts the voltage commands Vu*, Vv*, and Vw* into pulse width modulation signals corresponding to the voltage values of the input phase voltages Ep, Em, and En. Then, the PWM duty ratio calculation section 31 outputs the resulting PWM voltage commands Vu1*, Vv1*, and Vw1*. In the following description, the PWM voltage commands Vu1*, Vv1*, and Vw1* may be occasionally collectively referred to as PWM voltage command Vo1*.

<<1.5. Commutation section 32>>

The commutation section 32 executes commutation control, which is to switch the phases of the AC power source 2 to be coupled to the load 3 using the bidirectional switch S. Specifically, in response to the PWM voltage commands Vu1*, Vv1*, and Vw1*, the commutation section 32 determines the switching order of the bidirectional switch S at the time of commutation based on the polarity of each of the output phase currents Iu, Iv, and Iw and based on the input phase voltages Ep, Em, and En. Based on the switching order thus determined, the commutation section 32 generates the gate signals S1u to S6u, S1v to S6v, and S1w to S6w.

The gate signals S1u to S6u, S1v to S6v, and S1w to S6w are input into each of the unidirectional switches Sio and Soi of the bidirectional switch S of the power conversion section 10. Thus, the unidirectional switches Sio and Soi are ON-OFF controlled.

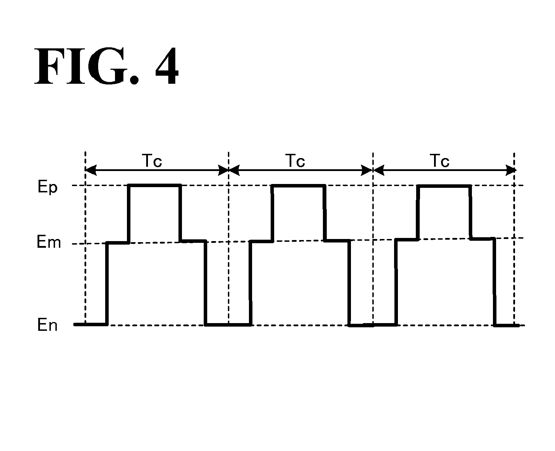

FIG. 4 is a diagram illustrating switching among the input phase voltages Ep, Em, and En, which are output to the output phases. The bidirectional switch S is controlled by the gate signal Sg in the manner shown in FIG. 4, where the input phase voltage output to each output phase switch sections in the order: En → Em → Ep → Em → En in a single cycle Tc of the PWM voltage command Vo1*, which is a pulse width modulation signal. The switching order of the input phase voltage to be output to the output phases is not limited to En → Em → Ep → Em → En.

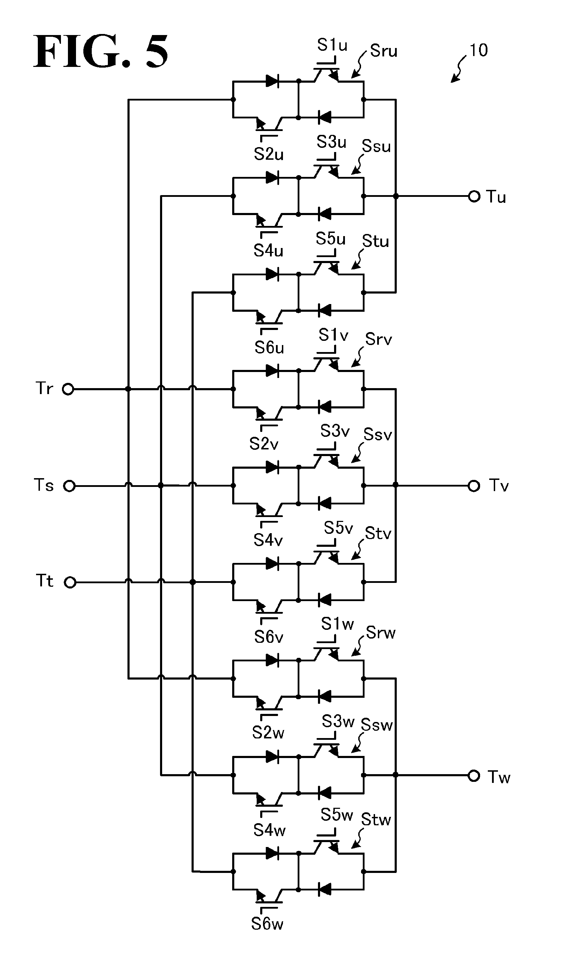

FIG. 5 illustrates a relationship between the unidirectional switches Sio and Soi of the plurality of bidirectional switches Sru, Ssu, Stu, Srv, Ssv, Stv, Srw, Ssw, and Stw and the gate signals S1u to S6u, S1v to S6v, and S1w to S6w. The LC filter 11 and the output current detection section 13 are omitted in FIG. 5.

The unidirectional switch Sio (see FIG. 2) of each of the bidirectional switches Sru, Ssu, and Stu is controlled by the corresponding one of the gate signals S1u, S3u, and S5u. The unidirectional switch Soi (see FIG. 2) of each of the bidirectional switches Sru, Ssu, and Stu is controlled by the corresponding one of the gate signals S2u, S4u, and S6u. Similarly, the unidirectional switches Sio and Soi of the bidirectional switches Srv, Ssv, and Stv are controlled by the gate signals S1v to S6v. The unidirectional switches Sio and Soi of the bidirectional switches Srw, Ssw, and Stw are controlled by the gate signals S1w to S6w.

Referring back to FIG. 3, the control section 14 will be further described. The commutation section 32 includes a first commutation control section 41, a second commutation control section 42, and a selection section 43. The first and second commutation control sections 41 and 42 are both capable of determining the switching order of the bidirectional switches S and generating the gate signals S1u to S6u, S1v to S6v, and S1w to S6w.

The selection section 43 selects one of the first and second commutation control sections 41 and 42 based on a vector of the output current Io (the vector will be hereinafter referred to as output current vector Ioαβ). Then, the selection section 43 causes the selected commutation control section to output the gate signals S1u to S6u, S1v to S6v, and S1w to S6w. This eliminates or minimizes a commutation failure such as opening of the output phase and improves accuracy of the output voltage Vo. The configurations of the first commutation control section 41, the second commutation control section 42, and the selection section 43 will be described in detail below.

<<1.5.1. First commutation control section 41>>

The first commutation control section 41 performs the commutation control based on a first commutation. The first commutation is a method of commutation that has higher dependency on the polarity of the output current Io than a second commutation. An example of the first commutation is a 4-step current commutation, which is relatively long in terms of the output opening time during the commutation operation when the polarity of the output current Io is incorrect.

In the 4-step current commutation, the commutation operation is based on a switching pattern of the following steps 1 to 4 in accordance with the polarity of the output current Io, so as to eliminate or minimize inter-input phase short-circuiting and opening of the output phase.

Step 1: Turn OFF one unidirectional switch, among the unidirectional switches of the bidirectional switch S serving as the switching source, that has a polarity opposite to the polarity of the output current Io.
Step 2: Turn ON one unidirectional switch, among the unidirectional switches of the bidirectional switch S serving as the switching destination, that has the same polarity as the polarity of the output current Io.
Step 3: Turn OFF one unidirectional switch, among the unidirectional switches of the bidirectional switch S serving as the switching source, that has the same polarity as the polarity of the output current Io.
Step 4: Turn ON one unidirectional switch, among the unidirectional switches of the bidirectional switch S serving as the switching destination, that has a polarity opposite to the polarity of the output current Io.

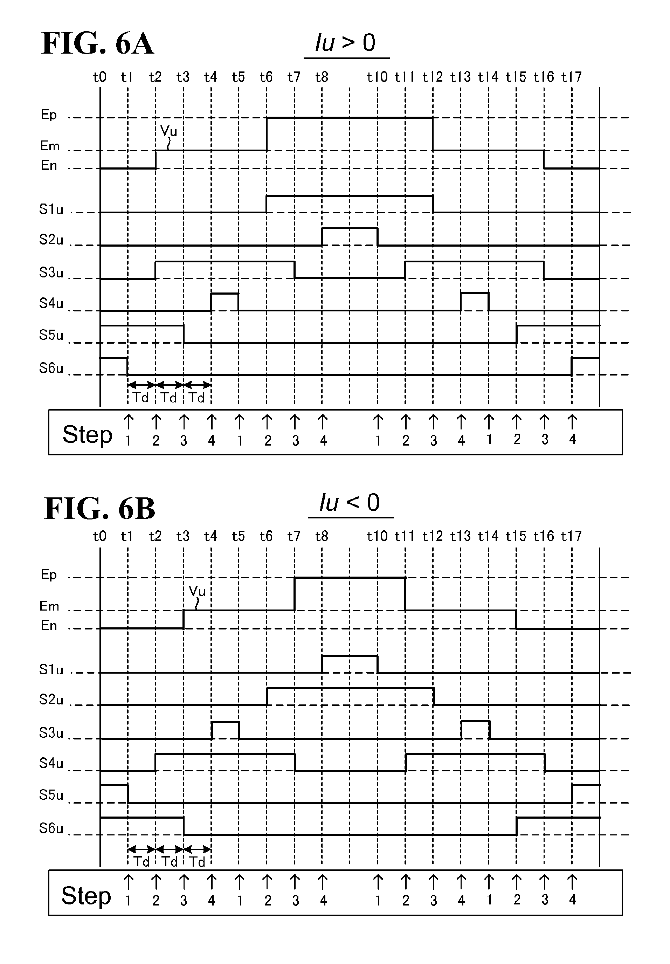

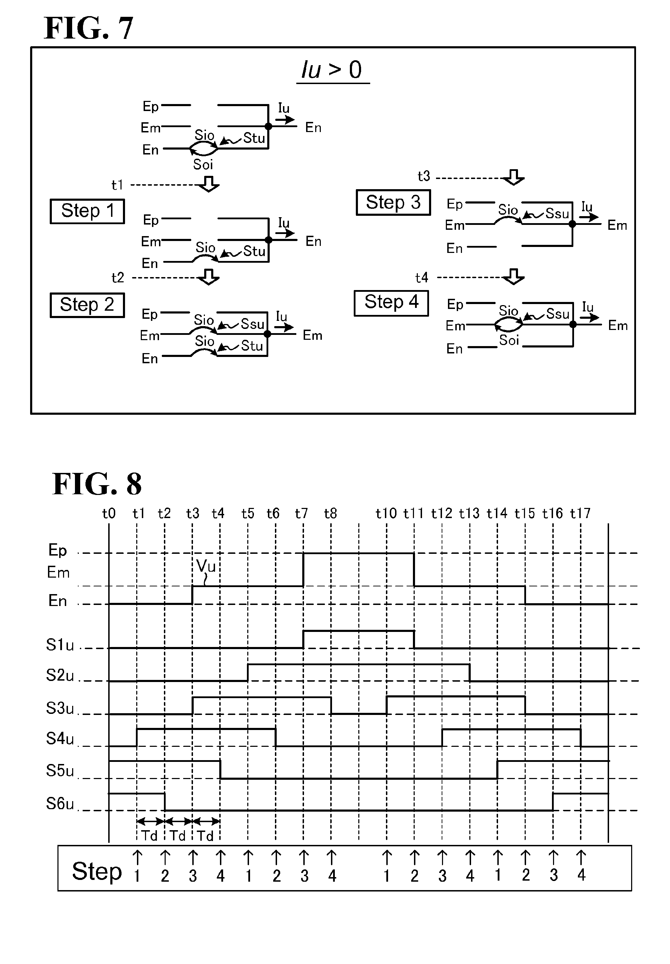

The 4-step current commutation will be described below by referring to FIGs. 6A, 6B, and 7. Here, each commutation method is similar throughout the U, V, and W phases, and the following description will take the U phase as an example. Also in the following description, the polarity of the output current Io flowing from the AC power source 2 to the load 3 will be regarded as positive (Io > 0).

FIGs. 6A and 6B illustrate relationships in the 4-step current commutation between the output phase voltage Vu and the gate signals S1u to S6u. FIG. 6A illustrates the commutation operation in a case where the output phase current Iu is a positive value. FIG. 6B illustrates the commutation operation in a case where the output phase current Iu is a negative value. FIG. 7 illustrates states of the unidirectional switches Sio and Soi at time t1 to time t4 shown in FIG. 6A. Here, the following applies: Ep = Er, Em = Es, and En = Et.

As shown in FIG. 6A, where the output phase current Iu is a positive value, at time t0, which is before the start of the commutation operation, the gate signals S5u and S6u are at High level, while the gate signals S1u to S4u are at Low level. In this state, as shown in FIG. 7, the bidirectional switch Stu is ON and the other bidirectional switches Ssu and Sru are OFF. Hence, the input phase voltage En is output to the U phase.

At time t1, which is when the commutation operation starts, the first commutation control section 41 changes the gate signal S6u from High level to Low level (step 1). This state is as shown in FIG. 7, where the unidirectional switch Soi is turned OFF in the bidirectional switch Stu serving as a switching source. The unidirectional switch Soi has a polarity opposite to the polarity of the output phase current Iu. Here, the unidirectional switch Sio is ON in the bidirectional switch Stu serving as the switching source. The conducting direction of the unidirectional switch Sio is the same as the direction of flow of the output phase current Iu. This ensures that no opening of the output phase occurs, allowing the output phase current Iu to keep flowing.

Then, at time t2, the first commutation control section 41 changes the gate signal S3u from Low level to High level (step 2). This state is as shown in FIG. 7, where the unidirectional switch Sio is turned ON in the bidirectional switch Ssu as serving a switching destination. The unidirectional switch Sio has the same polarity as the polarity of the output phase current Iu. Here, the unidirectional switch Soi is OFF in the bidirectional switch Stu serving as the switching source. The conducting direction of the unidirectional switch Sio is opposite to the direction of flow of the output phase current Iu. This ensures that the input phase voltage output to the U phase is switched from En to Em without interphase short-circuiting of the AC power source 2, allowing the output phase current Iu to keep flowing.

Then, at time t3, the first commutation control section 41 changes the gate signal S5u from High level to Low level (step 3). This state is as shown in FIG. 7, where the unidirectional switch Sio is turned OFF in the bidirectional switch Stu serving as the switching source. The unidirectional switch Sio has the same polarity as the polarity of the output phase current Iu. Here, the unidirectional switch Sio is ON in the bidirectional switch Ssu serving as the switching destination. The conducting direction of the unidirectional switch Sio is the same as the direction of flow of the output phase current Iu. This ensures that no opening of the output phase occurs, allowing the output phase current Iu to keep flowing.

Then, at time t4, the first commutation control section 41 changes the gate signal S4u from Low level to High level (step 4). This state is as shown in FIG. 7, where the conducting direction of the bidirectional switch Ssu serving as the switching destination becomes bidirectional. In contrast, the bidirectional switch Stu serving as the switching source is turned OFF. Thus, the commutation operation of switching the input phase voltage output to the U phase from En to Em is completed.

At time t5 to time t17 shown in FIG. 6A and at time t1 to time t17 shown in FIG. 6B, the unidirectional switches Sio and Soi are controlled in the same manner as in the case of time t1 to time t4 shown in FIG. 6A.

Thus, in the commutation control based on the 4-step current commutation, the voltage to be output as the output phase voltage Vu is changeable in the order En → Em → Ep → Em → En. At the same time, inter-input phase short-circuiting is eliminated or minimized, and opening of the output phase is eliminated or minimized. The above-described commutation control is similar on the output phase voltages Vv and Vw.

«1.5.2. Second commutation control section 42»

The second commutation control section 42 performs the commutation control based on the second commutation. The second commutation is a method of commutation that has lower dependency on the polarity of the output current Io than the first commutation. An example of the second commutation is a 4-step voltage commutation, which is relatively short in terms of the output opening time during the commutation operation when the polarity of the output current Io is incorrect.

In the 4-step voltage commutation, the commutation operation is based on a switching pattern of the following steps 1 to 4 in accordance with the relationship in magnitude among the input phase voltages Er, Es, and Et, so as to eliminate or minimize inter-input phase short-circuiting and opening of the output phase. In the 4-step voltage commutation, it is not necessary to change the switching pattern depending on the polarity of the output current Io.

    Step 1: Turn ON a reverse biased unidirectional switch in a switching destination.
    Step 2: Turn OFF a reverse biased unidirectional switch in a switching source.
    Step 3: Turn ON a forward biased unidirectional switch in the switching destination.
    Step 4: Turn OFF a forward biased unidirectional switch in the switching source.

In the unidirectional switch Sio, the reverse bias refers to a state where the input side voltage is lower than the output side voltage immediately before the commutation operation. The forward bias refers to a state where the input side voltage is higher than the output side voltage immediately before the commutation operation. In the unidirectional switch Soi, the forward bias refers to a state where the input side voltage is lower than the output side voltage immediately before the commutation operation. The reverse bias refers to a state where the input side voltage is higher than the output side voltage immediately before the commutation operation.

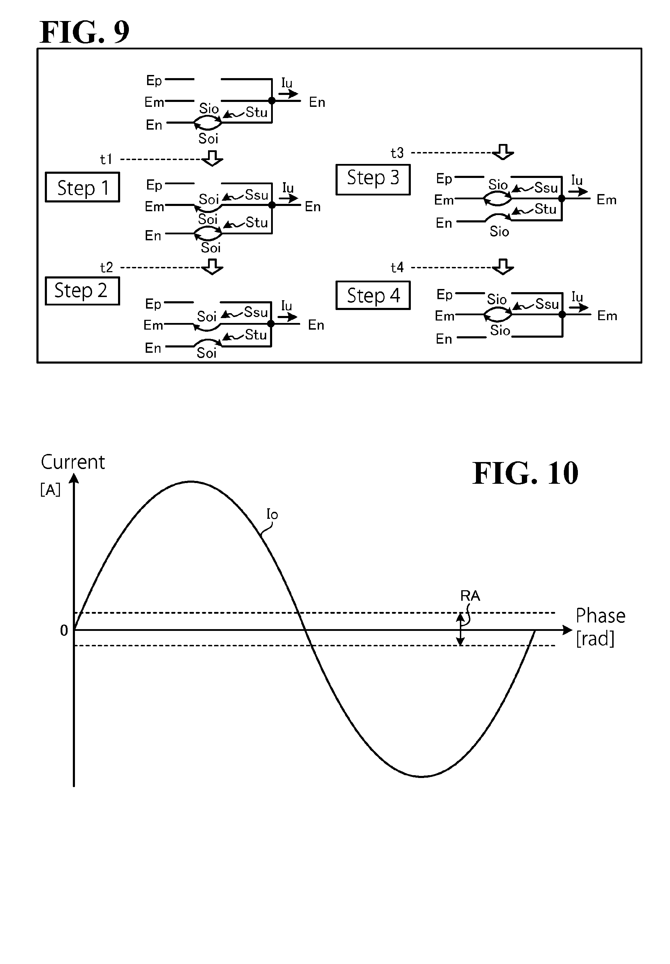

FIG. 8 illustrates a relationship in the 4-step voltage commutation among the output phase voltage Vu, the gate signals S1u to S6u, and the steps in the commutation operation. FIG. 9 illustrates states of the unidirectional switches Sio and Soi at time t1 to time t4 shown in FIG. 8. Here, the following applies: Ep = Er, Em = Es, and En = Et.

As shown in FIG. 8, at time t1, the second commutation control section 42 changes the gate signal S4u from Low level to High level. This state is as shown in FIG. 9, where the unidirectional switch Soi is turned ON in the bidirectional switch Ssu serving as the switching destination (step 1). Here, the conducting direction of the unidirectional switch Soi in the bidirectional switch Ssu is opposite to the direction of flow of the output phase current Iu. This ensures that no inter-input phase short-circuiting occurs.

Then, at time t2, the second commutation control section 42 changes the gate signal S6u from High level to the low level. This state is as shown in FIG. 9, where the unidirectional switch Soi is turned OFF in the bidirectional switch Stu serving as the switching source (step 2). Here, the unidirectional switch Sio in the bidirectional switch Stu is ON. The conducting direction of the unidirectional switch Sio is the same as the direction of flow of the output phase current Iu. This ensures that no opening of the output phase occurs, allowing the output phase current Iu to keep flowing.

Then, at time t3, the second commutation control section 42 changes the gate signal S3u from Low level to High level. This state is as shown in FIG. 9, where the unidirectional switch Soi in the bidirectional switch Ssu serving as the switching destination is turned ON (step 3). Thus, the input phase voltage output to the U phase is switched from En to Em, allowing the output phase current Iu to keep flowing.

Then, at time t4, the second commutation control section 42 changes the gate signal S5u from High level to Low level (step 4). This state is as shown in FIG. 9, where the conducting direction of the bidirectional switch Ssu serving as the switching destination becomes bidirectional, while the bidirectional switch Stu serving as the switching source is turned OFF. Thus, the commutation operation of switching the input phase voltage output to the U phase from En to Em is completed.

At time t5 to time t8, time t10 to time t13, and time t14 to time t17 shown in FIG. 8, the switching processing of steps 1 to 4 is performed as in the case of time t1 to time t4. A step time length Td is longer than turn-ON time and turn-OFF time of the unidirectional switches Sio and Soi. While the steps have the same step time length Td for convenience of description, the steps may have mutually different step time lengths. This also applies in the above-described 4-step current commutation and the commutations described below.

Thus, in the 4-step voltage commutation, the voltage to be output as the output phase voltage Vu is changeable in the order En → Em → Ep → Em → En. At the same time, inter-input phase short-circuiting is eliminated or minimized, and opening of the output phase is eliminated or minimized. The above-described commutation control is similar on the output phase voltages Vv and Vw, with a commutation failure eliminated or minimized. «1.5.3. Selection section 43»

Next, the selection section 43 will be described. The selection section 43 selects between the first and second commutation control sections 41 and 42 to perform the commutation control based on the output current vector Io$\alpha\beta$. As described above, the first commutation control section 41 performs the commutation control based on the first commutation, while the second commutation control section 42 performs the commutation control based on the second commutation.

The first commutation has relatively high dependency on the polarity of the output current Io, and thus is susceptible to detection sensitivity, detection noise, and other factors associated with the output current detection section 13. For example, a region RA shown in FIG. 10 is where the output current Io is small. In the region RA, the polarity of the output current Io is likely to be incorrect, which likely causes the output phase to go open. When the opening of the output phase occurs, a surge voltage is generated, and this may cause degraded accuracy of the output voltage Vo.

In contrast, the second commutation has relatively low dependency on the polarity of the output current Io, and thus is less susceptible to detection sensitivity, detection noise, and other factors associated with the output current detection section 13 than the first commutation. In view of this, the selection section 43 selects the second commutation control section 42 in a region where a commutation failure is possible with the first commutation, so that the second commutation control section 42 performs the commutation control based on the second commutation.

The selection section 43 determines whether a region is where a commutation failure is possible with the first commutation based on the output current vector Io$\alpha\beta$, instead of on the absolute value of the output current Io. Specifically, the selection section 43 selects the first commutation control section 41 when the output current vector Io$\alpha\beta$ is outside a predetermined range, and selects the second commutation control section 42 when the output current vector Io$\alpha\beta$ is within the predetermined range.

This enables the selection section 43 to accurately determine whether a region is where a commutation failure is possible with the first commutation, and to cause the second commutation control section 42 to perform the commutation control based on the second commutation. This, as a result, eliminates or minimizes degradation of accuracy of the output voltage Vo due to a commutation failure associated with the first commutation control section 41.

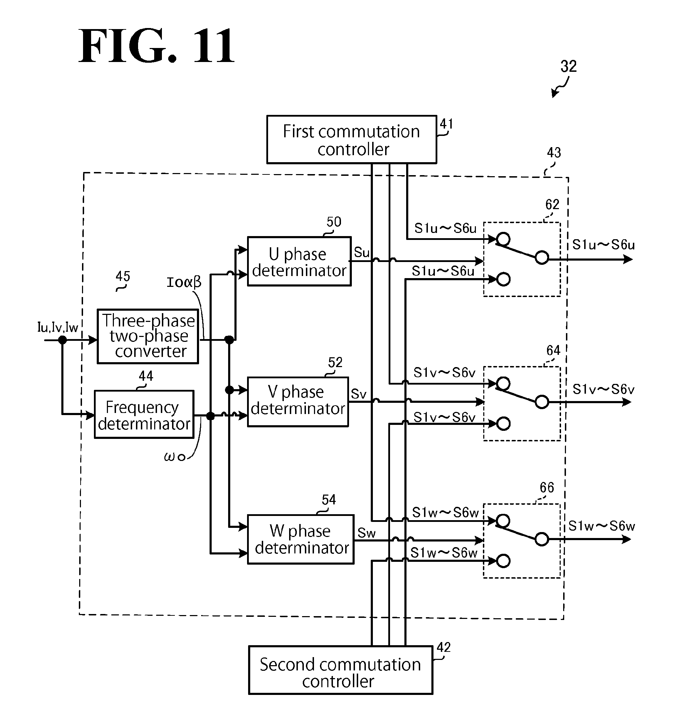

FIG. 11 is a diagram illustrating a configuration of the selection section 43. As shown in FIG. 11, the selection section 43 includes a frequency determination section 44, a three-phase two-phase conversion section 45, a U phase determination section 50, a V phase determination section 52, a W phase determination section 54, a U phase switch section 62, a V phase switch section 64, and a W phase switch section 66.

The frequency determination section 44 detects a frequency $\omega o$ of the output current Io (hereinafter referred to as output current frequency $\omega o$) based on the output phase currents Iu, Iv, and Iw. The output phase currents Iu, Iv, and Iw are detected by the output current detection section 13 or estimated by a motor angular velocity detection section (not shown) or from an output voltage command. The frequency determination section 44 includes phase locked loop (PLL), for example.

The three-phase two-phase conversion section 45 converts the output phase currents Iu, Iv, and Iw into $\alpha\beta$ components on two orthogonal axes of a fixed coordinate system to obtain the output current vector Io$\alpha\beta$. The output current vector Io$\alpha\beta$ has vector components, namely, a current component Io$\alpha$ in the $\alpha$ axis direction, and a current component Io$\beta$ in the $\beta$ axis direction.

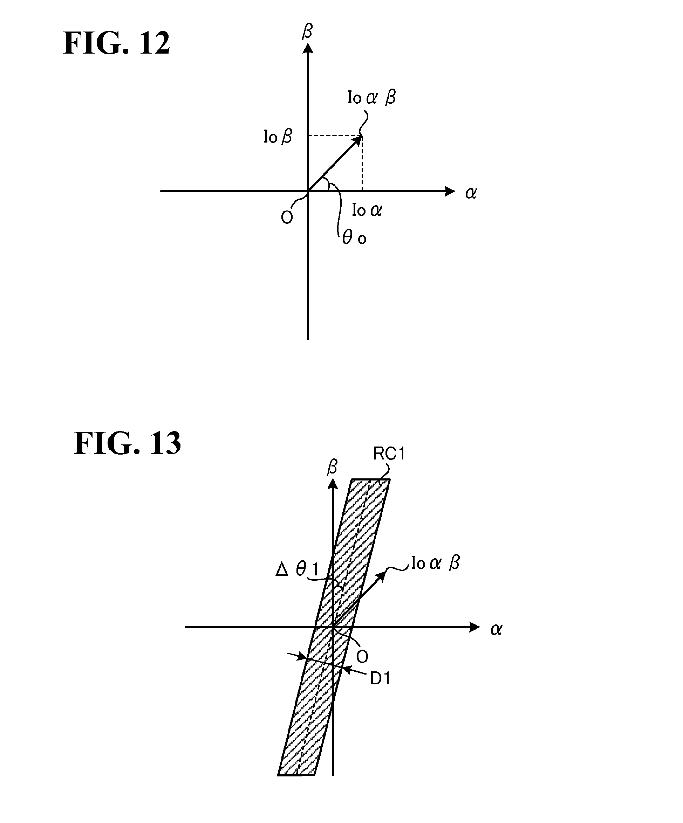

FIG. 12 illustrates an exemplary output current vector Io$\alpha\beta$. As shown in FIG. 12, the output current vector Io$\alpha\beta$ is a rotation vector having its starting point at the origin O of a biaxial orthogonal coordinate system. The three-phase two-phase conversion section 45 obtains the output current vector Ioαβ using the following Formula (1), for example.
[Formula 1]

$$\begin{bmatrix} I_{0\alpha} \\ I_{0\beta} \end{bmatrix} = \sqrt{\frac{2}{3}} \cdot \begin{bmatrix} 1 & -1/2 & -1/2 \\ 0 & \sqrt{3}/2 & -\sqrt{3}/2 \end{bmatrix} \begin{bmatrix} Iu \\ Iv \\ Iw \end{bmatrix} \qquad \cdots (1)$$

For the commutation operation in the U phase, the U phase determination section 50 shown in FIG. 11 outputs a U phase selection signal Su for selecting between the first and second commutation control sections 41 and 42 to perform the commutation control based on the output current vector Ioαβ.

Specifically, the U phase determination section 50 outputs a High level of U phase selection signal Su when the output current vector Ioαβ is outside a predetermined range RCx (x = 1 to 7). The U phase determination section 50 outputs a Low level of U phase selection signal Su when the output current vector Ioαβ is within the predetermined range RCx. The output current vector Ioαβ is less susceptible to detection error of the output current detection section 13 than the output phase currents Iu, Iv, and Iw. This improves the accuracy of determination as to commutation switching.

The U phase determination section 50 sets the predetermined range RCx based on a parameter Pa (= 1 to 7) and a parameter Pb (= 1 to 3), which are set in an internal storage of the U phase determination section 50. The predetermined range RCx set by the parameters Pa and Pb will be described in detail below. For example, the parameters Pa and Pb may be set through an input device, not shown, by a person who installs the matrix converter 1.

<<Pa = 1>>

FIG. 13 illustrates an exemplary predetermined range RC1 in the U phase in a case where Pa = 1. As shown in FIG. 13, the predetermined range RC1 has a predetermined width D1 and is turned about the origin O by a predetermined angle Δθ1 with respect to the β axis. Thus, the predetermined range RC1 is inclined with respect to the β axis. For the U phase, the predetermined range RCx is set based on a reference direction. The reference direction is a direction (the positive direction and negative direction of the β axis) in which the output current vector Ioαβ is oriented at a phase at which the output phase current Iu is zero (π/2 and 3π/2 in this example).

Setting the predetermined range RC1 in this manner compensates for such occurrences during a period of small output phase current Iu as a delay of switching of the switching pattern in accordance with the polarity of the output current Io (such delay will be hereinafter referred to as polarity switching delay). As a result, a region where a commutation failure is possible is set into the predetermined range RC1.

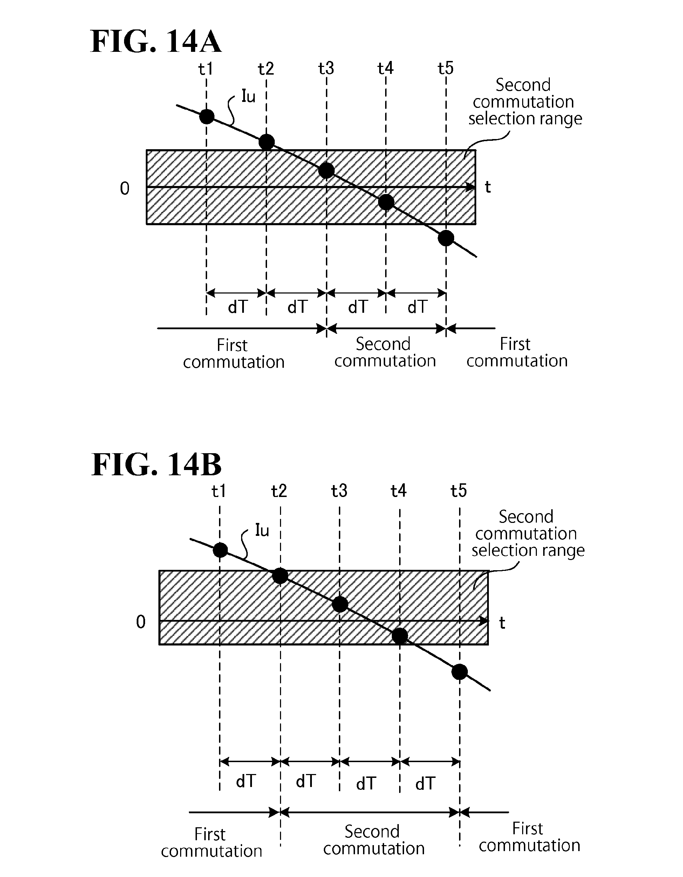

FIG. 14A illustrates a conceptual relationship among the output phase current Iu, a commutation selection cycle dT, and the selected commutation in a case where Δθ1 = 0. In the example shown in FIG. 14A, the first commutation is selected in the period (between time t2 and time t3) of a small output phase current Iu; thus there is a possibility of a commutation failure.

In contrast, as shown in FIG. 14B, the predetermined range RC1 is set at Δθ1 > 0, and thus the second commutation is selected in the period (between time t2 and time t5) of a small output phase current Iu. This reduces the possibility of a commutation failure as compared with the case of Δθ1 = 0. FIG. 14B illustrates a conceptual relationship among the output phase current Iu, the commutation selection cycle dT, and the selected commutation in a case where Δθ1 > 0.

The U phase determination section 50 obtains the predetermined angle Δθ1 based on, for example, the following Formula (2) or a table corresponding to Formula (2). Thus, an angle that corresponds to the output current frequency ωo and to the commutation selection cycle dT is used as the predetermined angle Δθ1. This accurately reduces the possibility of a commutation failure even when the output current frequency ωo changes.
[Formula 2]

$$\Delta\theta1 = \omega o \times dT \qquad \cdots (2)$$

The U phase determination section 50 sets the predetermined width D1 in accordance with the setting of the parameter Pb. In a case where Pb = 1, the predetermined width D1 is set at a value obtained by multiplying an average detection error Ndis of the output current detection section 13 by a safety coefficient Kdis (> 1). In a case where Pb = 2, the predetermined width D1 is set at a value obtained by a sine function of a product of the output current frequency ωo, the commutation selection cycle dT, and a safety coefficient Ks (> 1). This eliminates or minimizes a delay of polarity switching in a period of small output phase current Iu even when the output current frequency ωo is high.

In a case where Pb = 3, the U phase determination section 50 obtains the predetermined width D1 from the following Formula (3) or a table corresponding to Formula (3). Thus, the predetermined width D1 is selected from, whichever is greater: the width determined by the average detection error Ndis; and the width at which a delay of polarity switching is eliminated or minimized even when the output current frequency ωo is high. In Formula (3), Ioc denotes an overcurrent value of the output current Io, and Ks (> 2) denotes a safety coefficient.

[Formula 3]

$$D1 = \max(Kdis \times Ndis, 2 \times Ioc \times \sin(Ks \times \omega o \times dT / 2)) \qquad \cdots (3)$$

<<Pa = 2>>

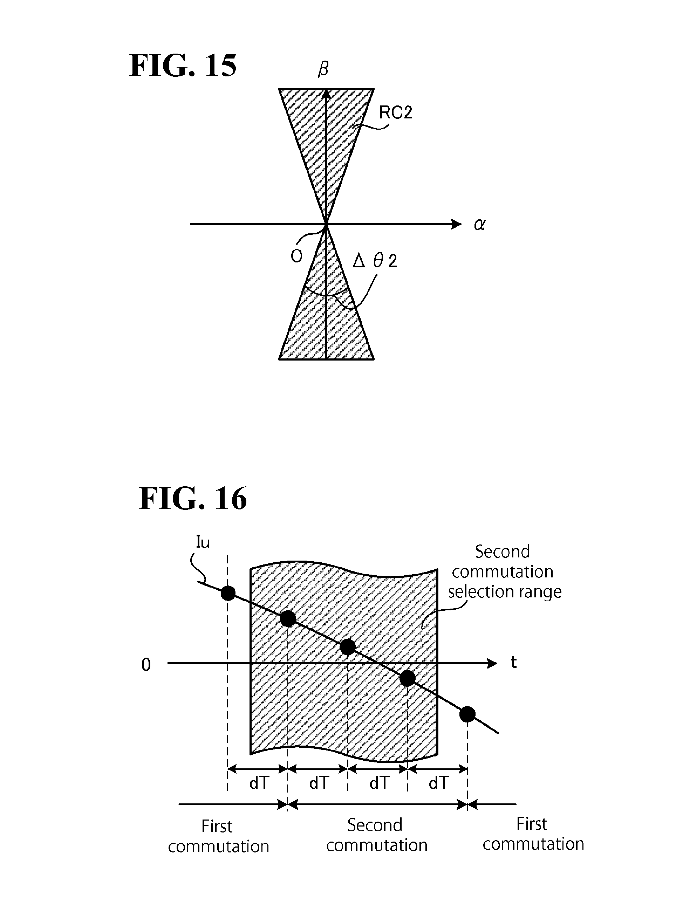

FIG. 15 illustrates an exemplary predetermined range RC2 in the U phase in a case where Pa = 2. As shown in FIG. 15, the predetermined range RC2 spreads from the origin O by a predetermined angle Δθ2 in the positive and negative directions of the β axis direction. This reduces the possibility of a commutation failure.

As described above, in the example shown in FIG. 14A, the first commutation is selected in the period of small output phase current Iu; thus, there is a possibility of a commutation failure. As shown in FIG. 16, in a case where Pa = 2, the selection range of the second commutation relative to the output phase current Iu is wider for the U phase determination section 50 in the magnitude direction of the output phase current Iu in the period of small output phase current Iu.

This prevents the second commutation from being left out from selection in the period of small output phase current Iu, and reduces the possibility of a commutation failure. FIG. 16 illustrates a conceptual relationship among the output phase current Iu, the commutation selection cycle dT, and the selected commutation in a case where Pa = 2.

In a case where Pa = 2, the U phase determination section 50 may select the second commutation regardless of the magnitude of the output phase current Iu, when a phase θu of the output phase current Iu is (π - Δθ2)/2 to π + Δθ2)/2.

In a case where Pa = 2, the U phase determination section 50 obtains the predetermined angle Δθ2 from the following Formula (4) or a table corresponding to Formula (4), for example. Thus, the predetermined angle Δθ2 is selected from, whichever is greater: the angle at which a delay of polarity switching is eliminated or minimized even when the output current frequency ωo is high; and the angle that increases as the vector length of the output current vector Ioαβ decreases. In Formula (4), |Ioαβ| denotes the vector length of the output current vector Ioαβ, and Ks (> 1) denotes a safety coefficient.

[Formula 4]

$$\Delta \theta 2 = \max(Ks \times \omega o \times d T, 2 \times \sin^{-1}(Kdis \times Ndis / |I_{o\alpha\beta}|)) \qquad \cdots (4)$$

<<Pa = 3>>

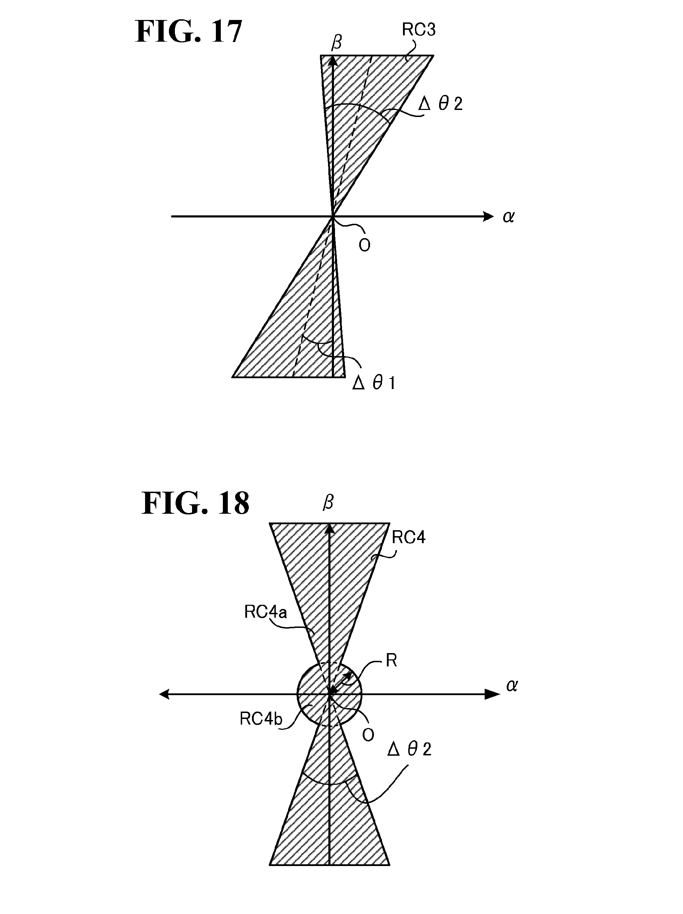

FIG. 17 illustrates an exemplary predetermined range RC3 in the U phase in a case where Pa = 3. As shown in FIG. 17, the predetermined range RC3 is obtained by turning the predetermined range RC2 (see FIG. 15) about the origin O by the predetermined angle Δθ1.

This compensates for a delay of polarity switching in the period of small output phase current Iu regardless of the magnitude of the output phase current Iu, and reduces the possibility of a commutation failure. For example, when the phase θu of the output phase current Iu is (π - Δθ2 - Δθ1)/2 to (π + Δθ2 - Δθ1)/2, the second commutation may be selected regardless of the magnitude of the output phase current Iu.

<<Pa = 4>>

FIG. 18 illustrates an exemplary predetermined range RC4 in the U phase in a case where Pa = 4. As shown in FIG. 18, the predetermined range RC4 includes a range RC4a and a range RC4b. The range RC4a is the same as the predetermined range RC2 (see FIG. 15). The range RC4b is an area of radius R around the origin O.

In the range RC4b, the second commutation is selected when the length of the output current vector Ioαβ is short (amplitude of the output current Iu is small). This ensures that the second commutation is selected any time when the amplitude of the output phase current Iu is small, as compared with the case where Pa = 2. This, in turn, further reduces the possibility of a commutation failure.

The U phase determination section 50 obtains the radius R from the following Formula (5) or a table corresponding to Formula (5), for example. The safety coefficient Kdis is a value larger than 1.

[Formula 5]

$$R = Kdis \times Ndis \qquad \cdots (5)$$

The U phase determination section 50 obtains the predetermined angle Δθ2 from the following Formula (6) or a table corresponding to Formula (6), for example, instead of Formula (4).

[Formula 6]

$$\Delta\theta2 = \max(Ks \times \omega o \times dT, 2 \times \sin^{-1}(1/Kdis)) \qquad \cdots (6)$$

<<Pa = 5>>

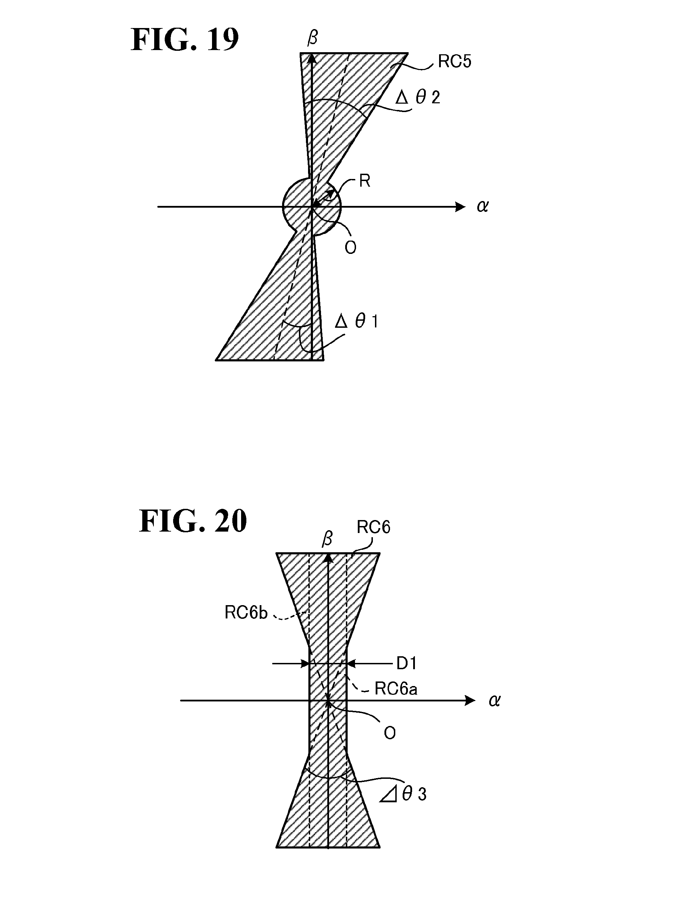

FIG. 19 illustrates an exemplary predetermined range RC5 in the U phase in a case where Pa = 5. As shown in FIG. 19, the predetermined range RC5 is obtained by turning the predetermined range RC4 (see FIG. 18) about the origin O by a predetermined angle θ1.

As compared with the predetermined range RC4, the predetermined range RC5 provides more of a compensation for a delay of polarity switching during the period of small output phase current Iu, and further reduces the possibility of a commutation failure.

<<Pa = 6>>

FIG. 20 illustrates an exemplary predetermined range RC6 in the U phase in a case where Pa = 6. As shown in FIG. 20, the predetermined range RC6 includes a range RC6a and a range RC6b. The range RC6a spreads from the origin O in the positive and negative directions of the β axis direction by a predetermined angle Δθ3. The range RC6b has a predetermined width D1 and extends from the origin O in the positive and negative directions of the β axis direction while maintaining the predetermined width D 1.

The U phase determination section 50 obtains the predetermined angle Δθ3 based on, for example, the following Formula (7) or a table corresponding to Formula (7). Thus, an angle that corresponds to a product of the output current frequency ωo and the commutation selection cycle dT is used as the Δθ3. This reduces the possibility of a commutation failure in the period of small output phase current Iu. The safety coefficient Ks is a value larger than 2.

[Formula 7]

$$\Delta\theta3 = Ks \times \omega o \times dT \qquad \cdots (7)$$

In a case where Pa = 6, the U phase determination section 50 sets a product of the average detection error Ndis and the safety coefficient Kdis (> 1) as the predetermined width D1. This reduces the possibility of a commutation failure when the amplitude of the output phase current Iu is small, even when the output current frequency ωo is high.

<<Pa = 7>>

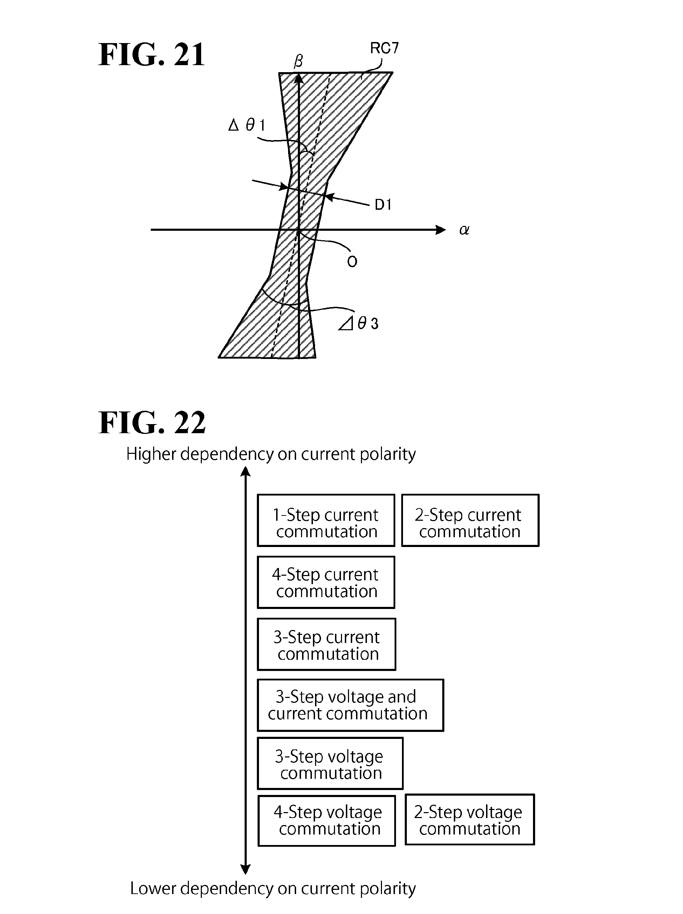

FIG. 21 illustrates an exemplary predetermined range RC7 in the U phase in a case where Pa = 7. As shown in FIG. 21, the predetermined range RC7 is obtained by turning the predetermined range RC6 about the origin O by the predetermined angle θ1.

As compared with the predetermined range RC6, the predetermined range RC7 provides more of a compensation for a delay of polarity switching in the period of small output phase current Iu, and further reduces the possibility of a commutation failure.

Description will be made with regard to processing of comparison between the output current vector Ioαβ and the predetermined range RCx in the U phase determination section 50. The following description will take as an example the processing of comparison between the output current vector Ioαβ and the predetermined range RC1.

The following Formula (8) represents a general expression of a line multiplied by a rotation matrix of the rotational angle Δθ1. From Formula (8), the predetermined range RC1 is defined by lines represented by the following Formula (9).
[Formula 8]

$$\begin{bmatrix} \alpha \\ \beta \end{bmatrix} = \begin{bmatrix} \cos\Delta\theta1 & \sin\Delta\theta1 \\ -\sin\Delta\theta1 & \cos\Delta\theta1 \end{bmatrix} \begin{bmatrix} \alpha' \\ A\alpha'+B \end{bmatrix} \quad \cdots(8)$$

$$\beta = \frac{A\cos\Delta\theta1 - \sin\Delta\theta1}{\cos\Delta\theta1 + A\sin\Delta\theta1}\alpha - \frac{A\cos\Delta\theta1 - \sin\Delta\theta1}{\cos\Delta\theta1 + A\sin\Delta\theta1}B\sin\Delta\theta1 + B\cos\Delta\theta1 \quad \cdots(9)$$

The relationships among the lines defining the predetermined range RC1 and the current vectors Ioα and Ioβ are represented by the following Formulae (10) and (11).
[Formula 9]

$$I_{o\beta} > \frac{A_1\cos\Delta\theta1 - \sin\Delta\theta1}{\cos\Delta\theta1 + A_1\sin\Delta\theta1}I_{o\alpha} - \frac{A_1\cos\Delta\theta1 - \sin\Delta\theta1}{\cos\Delta\theta1 + A_1\sin\Delta\theta1}B_1\sin\Delta\theta1 + B_1\cos\Delta\theta1 \quad \cdots(10)$$

$$I_{o\beta} < \frac{A_2\cos\Delta\theta1 - \sin\Delta\theta1}{\cos\Delta\theta1 + A_2\sin\Delta\theta1}I_{o\alpha} - \frac{A_2\cos\Delta\theta1 - \sin\Delta\theta1}{\cos\Delta\theta1 + A_2\sin\Delta\theta1}B_2\sin\Delta\theta1 + B_2\cos\Delta\theta1 \quad \cdots(11)$$

When the current vector Ioαβ satisfies Formulae (10) and (11), the U phase determination section 50 determines that the current vector Ioαβ is within the predetermined range RC1, and outputs a Low level of U phase selection signal Su. When the current vector Ioαβ does not satisfy Formulae (10) and (11), the U phase determination section 50 determines that the current vector Ioαβ is outside the predetermined range RC1, and outputs a High level of U phase selection signal Su.

The U phase determination section 50 performs the processing of comparison between the output current vector Ioαβ and the predetermined range RCx based on a parameter Pc, which is set in an internal storage of the U phase determination section 50. For example, in a case where Pa = 1 and Pc = 1, the U phase determination section 50 determines whether the current vector Ioαβ satisfies Formulae (10) and (11) as described above.

The U phase determination section 50 stores, in its internal storage, a determination table corresponding to Formula (9). In a case where Pc = 2, the U phase determination section 50 performs the processing of comparison between the output current vector Ioαβ and the predetermined range RCx based on the determination table stored in the storage. This reduces the load of calculation as compared with the case where Pc = 1.

In a case where Pa = 1 and Pc = 3, the U phase determination section 50 does not define the lines defining the predetermined range RC1 using the rotation matrix of the rotational angle Δθ1. Instead, the U phase determination section 50 rotates the output current vector Ioαβ. Two lines defining the predetermined range RC1 not rotated by the rotational angle Δθ1 are represented by the following Formula (12).
[Formula 10]

$$\beta' = A_1\alpha' + B_1$$
$$\beta' = A_2\alpha' + B_2 \qquad \cdots (12)$$

The output current vector Ioαβ rotated by the rotational matrix of the rotational angle Δθ1 is represented by the following Formula (13).
[Formula 11]

$$\begin{bmatrix} I_{o\alpha}' \\ I_{o\beta}' \end{bmatrix} = \begin{bmatrix} \cos\Delta\theta1 & -\sin\Delta\theta1 \\ \sin\Delta\theta1 & \cos\Delta\theta1 \end{bmatrix} \begin{bmatrix} I_{o\alpha} \\ I_{o\beta} \end{bmatrix} \qquad \cdots (13)$$

When the non-rotated two lines and the rotated output current vector Ioαβ satisfy the following Formula (14), the U phase determination section 50 determines that the current vector Ioαβ is within the predetermined range RC1, and outputs a Low level of U phase selection signal Su.
[Formula 12]

$$I_{o\beta}' > A_1 I_{o\alpha}' + B_1$$
$$I_{o\beta}' < A_2 I_{o\alpha}' + B_2 \qquad \cdots (14)$$

Referring back to FIG. 11, the selection section 43 will be further described. When the U phase selection signal Su is at High level, the U phase switch section 62 outputs the gate signals S1u to S6u output from the first commutation control section 41. When the U phase selection signal Su is at Low level, the U phase switch section 62 outputs the gate signals S1u to S6u output from the second commutation control section 42.

When the output current vector Ioαβ is outside a predetermined range RDx (x = 1 to 7), the V phase determination section 52 outputs a High level of V phase selection signal Sv. When the output current vector Ioαβ is within the predetermined range RDx, the V phase determination section 52 outputs a Low level of V phase selection signal Sv.

The predetermined range RDx is obtained by turning the predetermined range RCx about the origin O by $2\pi/3$. That is, for the V phase, the predetermined range RDx is set based on a reference direction, as in the case of the U phase. The reference direction is a direction in which the output current vector Ioαβ is oriented at a phase at which the output phase current Iv is zero ($\pi/6$ and $7\pi/6$ in this example), where the amplitude of the output phase current Iv is not zero.

Similarly to the U phase determination section 50, the V phase determination section 52 sets the predetermined range RDx based on the parameters Pa and Pb, which are set in an internal storage of the V phase determination section 52. Then, the V phase determination section 52 compares the output current vector Ioαβ with the predetermined range RDx based on the parameter Pc.

When the V phase selection signal Sv is at High level, the V phase switch section 64 outputs the gate signals S1v to S6v output from the first commutation control section 41. When the V phase selection signal Sv is at Low level, the V phase switch section 64 outputs the gate signals S1v to S6v output from the second commutation control section 42.

When the output current vector Ioαβ is outside a predetermined range REx (x = 1 to 7), the W phase determination section 52 outputs a High level of W phase selection signal Sw. When the output current vector Ioαβ is within the predetermined range REx, the W phase determination section 52 outputs a Low level of W phase selection signal Sw.

The predetermined range REx is obtained by turning the predetermined range RCx about the origin O by $4\pi/3$. That is, for the W phase, the predetermined range REx is set based on a reference direction, as in the case of the U phase. The reference direction is a direction in which the output current vector Ioαβ is oriented at a phase at which the output phase current Iw is zero ($5\pi/6$ and $11\pi/6$ in this example), where the amplitude of the output phase current Iw is not zero.

Similarly to the U phase determination section 50, the W phase determination section 54 sets the predetermined range REx based on the parameters Pa and Pb, which are set in an internal storage of the W phase determination section 54. Then, the W phase determination section 54 compares the output current vector Io$\alpha\beta$ with the predetermined range REx based on the parameter Pc.

When the W phase selection signal Sw is at High level, the W phase switch section 66 outputs the gate signals S1w to S6w output from the first commutation control section 41. When the W phase selection signal Sw is at Low level, the W phase switch section 66 outputs the gate signals S1w to S6w output from the second commutation control section 42.

The V phase determination section 52 and the W phase determination section 54 may use the predetermined range RCx as used by the U phase determination section 50. In this case, the V phase determination section 52 rotates the output current vector Io$\alpha\beta$ by $2\pi/3$, and the W phase determination section 54 rotates the output current vector Io$\alpha\beta$ by $4\pi/3$. The V phase determination section 52 compares the output current vector Io$\alpha\beta$ rotated by $2\pi/3$ with the predetermined range RCx. The W phase determination section 54 compares the output current vector Io$\alpha\beta$ rotated by $4\pi/3$ with the predetermined range RCx. Thus, the U phase determination section 50, the V phase determination section 52, and the W phase determination section 54 may share the predetermined range RCx.

As has been described hereinbefore, the matrix converter 1 according to this embodiment selects between the first and second commutation control sections 41 and 42 to perform the commutation control based on the vector of the output current from the power conversion section 10. This improves the accuracy of commutation switching. With improved accuracy of commutation switching, occurrence of surge voltage is eliminated or minimized. This, in turn, eliminates or minimizes failure of the power conversion section 10 without providing a snubber circuit or a similar circuit that is large in size and capacity. This, as a result, promotes reduced size, higher efficiency, and lower cost of the matrix converter 1.

The above description exemplifies the first commutation with the 4-step current commutation, and exemplifies the second commutation with the 4-step voltage commutation. This combination of the first and second commutations, however, should not be construed in a limiting sense.

FIG. 22 illustrates a relationship between the dependency on the polarity of the output current Io and the commutation types. The dependency that a commutation type has on the polarity of the output current Io becomes relatively higher as the commutation type takes a relatively longer time for output opening during the commutation operation when the polarity of the output current Io is incorrect.

The first commutation control section 41 stores a parameter Ps1 in an internal storage of the first commutation control section 41. The parameter Ps1 indicates the type of the first commutation, so that the first commutation control section 41 performs the commutation control based on the commutation corresponding to the parameter Ps1. The second commutation control section 42 stores a parameter Ps2 in an internal storage of the second commutation control section 42. The parameter Ps2 indicates the type of the second commutation, so that the second commutation control section 42 performs the commutation control based on the commutation corresponding to the parameter Ps2. In the first commutation, the parameters Ps1 and Ps2 are set under the condition that the first commutation has higher dependency on the polarity of the output current Io (hereinafter referred to as current polarity dependency) than the second commutation does. For example, the parameters Ps1 and Ps2 may be set through an input device, not shown, by a person who installs the matrix converter 1.

The commutations shown in FIG. 22 will be described. It should be noted that FIG. 22 illustrates the commutation types for exemplary purposes only, and the matrix converter 1 may use other commutations than those commutations shown in FIG. 22 using the parameters Ps1 and Ps2.

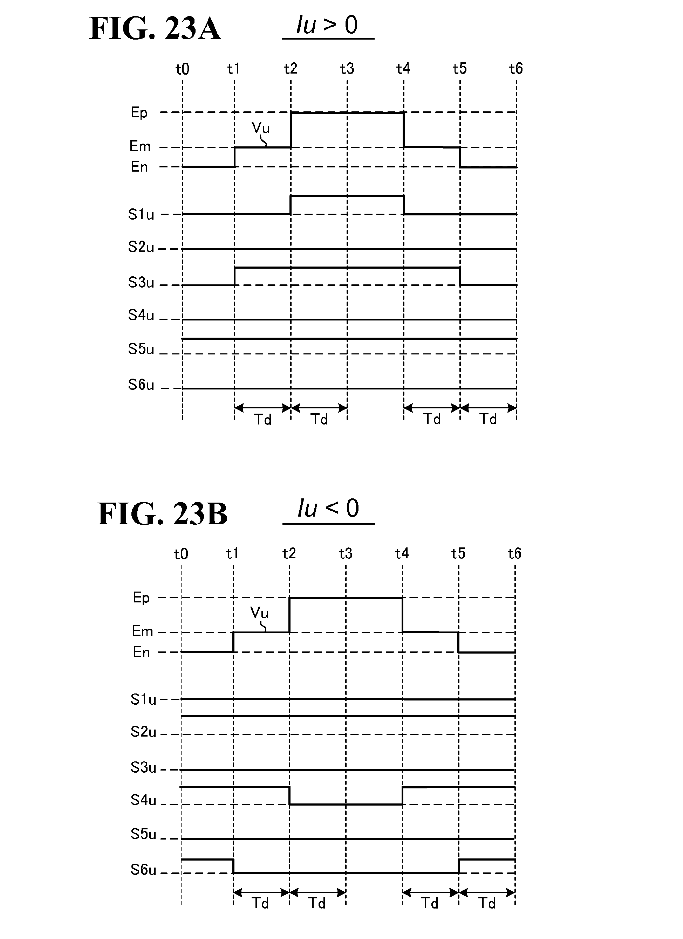

The "1-step current commutation" is such a method of commutation that the input phase voltage output to the output phase is switched on a one-step basis. For example, the commutation control is performed as shown in FIGs. 23A and 23B. FIGs. 23A and 23B illustrate a relationship in the 1-step current commutation among the output phase voltage Vu, the gate signals S1u to S6u, and the steps in the commutation operation, and respectively correspond to FIGs. 6A and 6B.

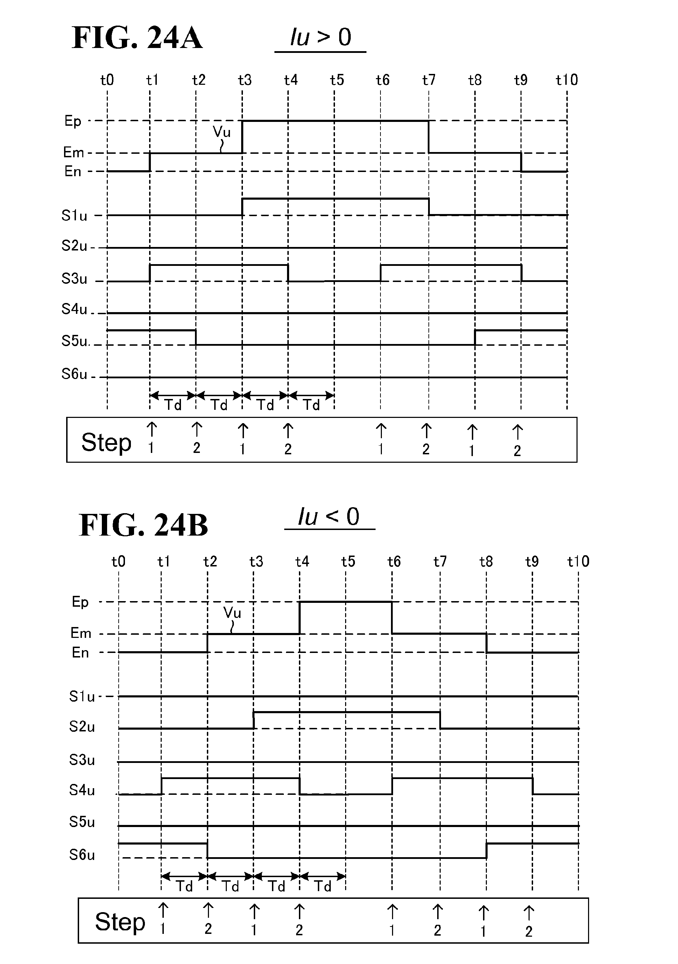

The "2-step current commutation" is such a method of commutation that the input phase voltage output to each output phase is switched on a two-step basis. In the 2-step current commutation, among the bidirectional switch S serving as the switching destination, a unidirectional switch with a conducting direction that is the same as the direction of the output current Io is turned ON (step 1). Then, among the bidirectional switch S serving as the switching source, a unidirectional switch with a conducting direction that is the same as the direction of the output current Io is turned OFF (step 2). FIGs. 24A and 24B illustrate a relationship in the 2-step current commutation among the output phase voltage Vu, the gate signals S1u to S6u, and the steps in the commutation operation, and respectively correspond to FIGs. 6A and 6B.

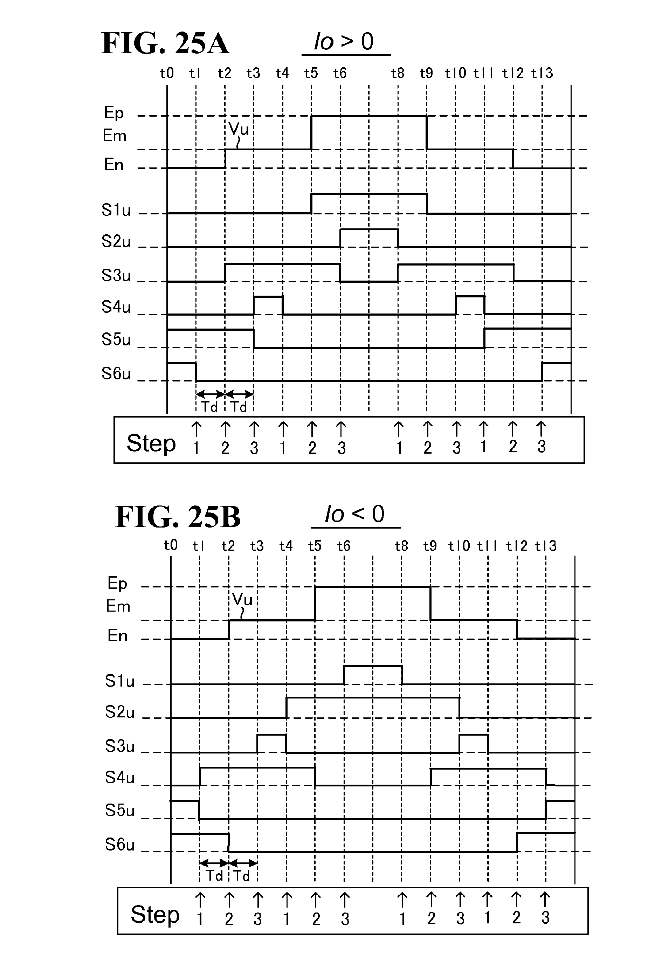

The "3-step current commutation" is such a method of commutation that the input phase voltage output to each output phase is switched on a three-step basis. The commutation control is performed as shown in FIGs. 25A and 25B. FIGs. 25A and 25B illustrate a relationship in the 3-step current commutation among the output phase voltage Vu, the gate signals S1u to S6u, and the steps in the commutation operation, and respectively correspond to FIGs. 6A and 6B.

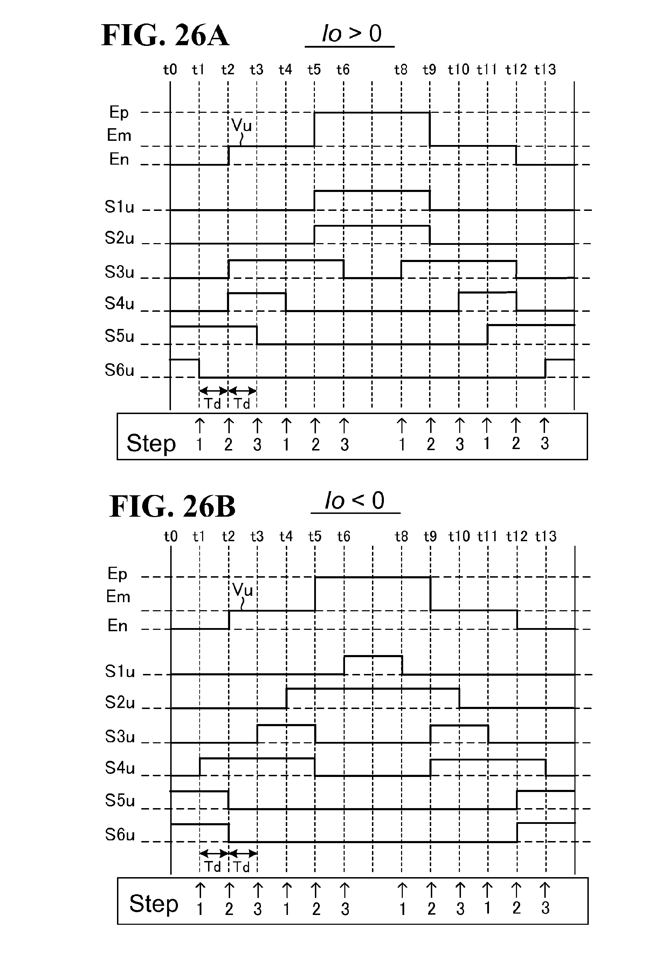

The "3-step voltage and current commutation" is such a method of commutation that one of its step 1 and step 2 is corresponding step 1 or step 2 of the 3-step voltage commutation, while the other one of step 1 and step 2 is corresponding step 1 or step 2 of the 3-step current commutation. FIGs. 26A and 26B illustrate a relationship in the 3-step voltage and current commutation among the output phase voltage Vu, the gate signals S1u to S6u, and the steps in the commutation operation, and respectively correspond to FIGs. 6A and 6B.

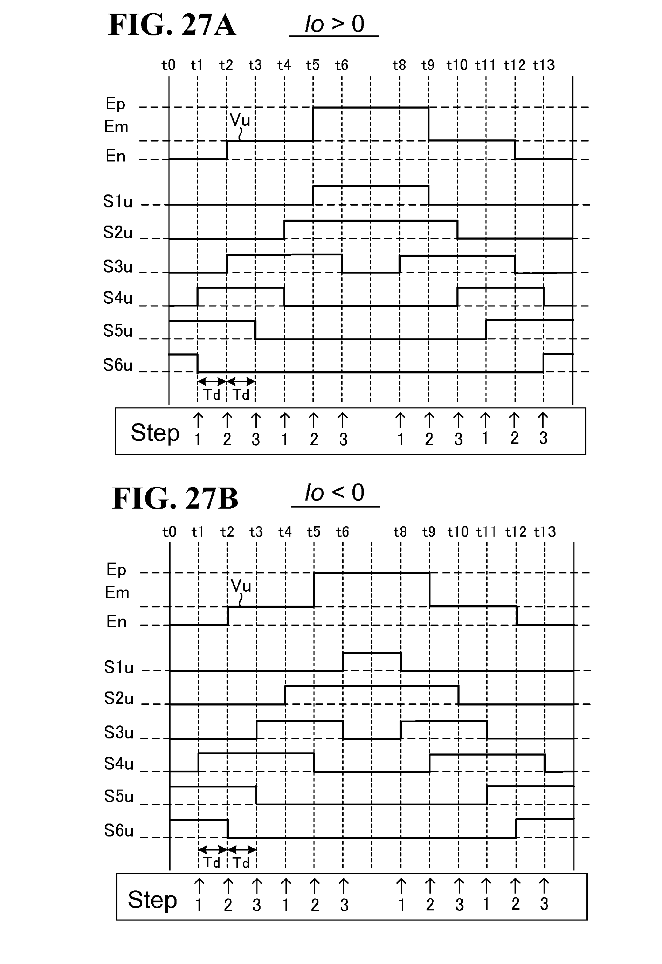

The "3-step voltage commutation" is such a method of commutation that the input phase voltage output to each output phase is switched on a three-step basis. The commutation control is performed as shown in FIGs. 27A and 27B. FIGs. 27A and 27B illustrate a relationship in the 3-step voltage commutation among the output phase voltage Vu, the gate signals S1u to S6u, and the steps in the commutation operation, and respectively correspond to FIGs. 6A and 6B.

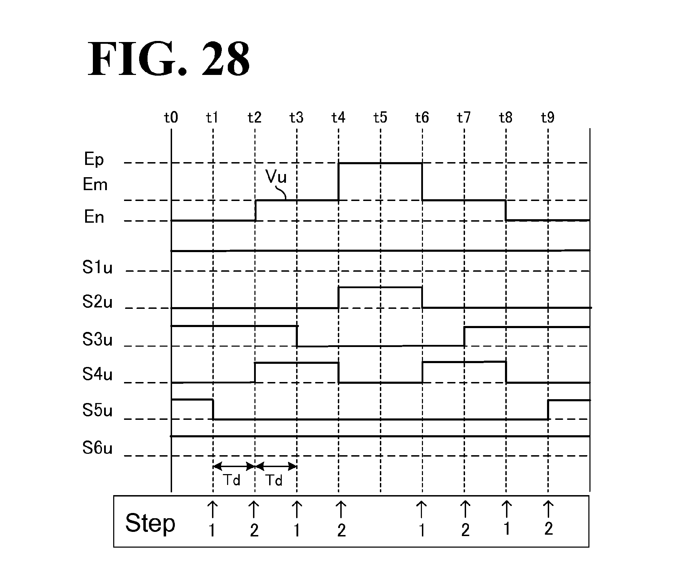

The "2-step voltage commutation" is such a method of commutation that the input phase voltage output to each output phase is switched on a two-step basis. Also the 2-step voltage commutation is such a method of commutation that the unidirectional switches Sio and Soi of the bidirectional switch S corresponding to the input phase voltage output to the output phase are both ON before and after the commutation operation, while in the remaining bidirectional switches S, only one of the unidirectional switches is ON. FIG. 28 illustrates a relationship in the 2-step voltage commutation among the output phase voltage Vu, the gate signals S1u to S6u, and the steps in the commutation operation, and corresponds to FIG. 8.

As has been described hereinbefore, the matrix converter 1 sets the first commutation or the second commutation as desired under the condition that the first commutation has higher current polarity dependency than the second commutation. This ensures setting of whichever commutation is more suitable for the environment in which the matrix converter 1 is installed or for the purpose that the matrix converter 1 serves. This improves the accuracy of the output voltage Vo.

«2. Second embodiment»

Next, a matrix converter according to a second embodiment will be described. The matrix converter according to the second embodiment is different from the matrix converter 1 according to the first embodiment in that the commutation control section is selected based on the output voltage vector. The following description will mainly focus on those respects that are different from the matrix converter 1 according to the first embodiment, and the same reference numerals designate the same elements and functions throughout the first and second embodiments.

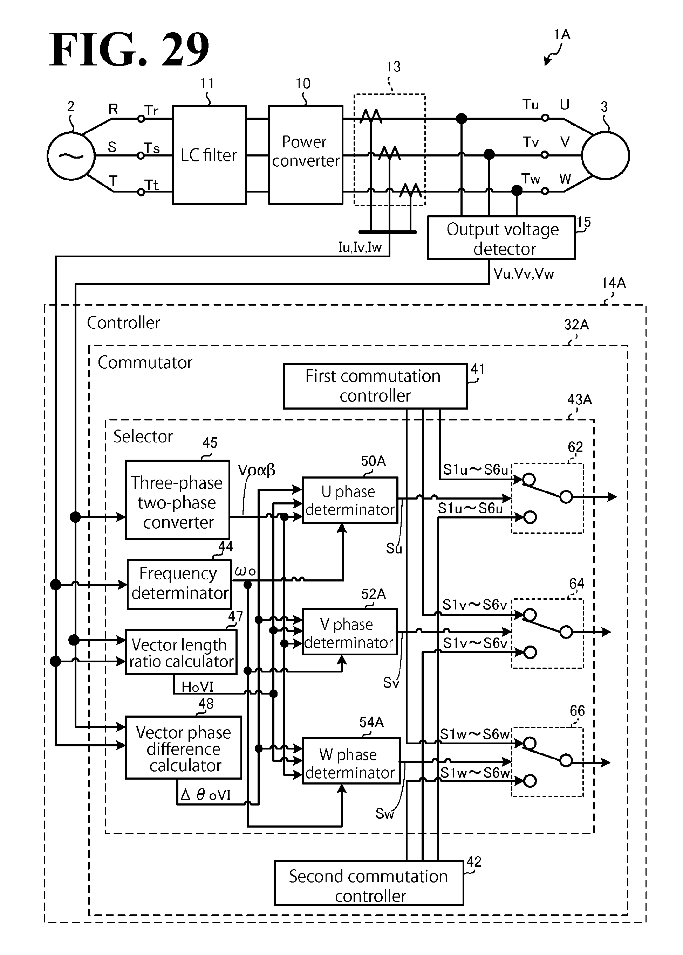

FIG. 29 is a diagram illustrating an exemplary configuration of a matrix converter 1A according to the second embodiment. As shown in FIG. 29, the matrix converter 1A according to the second embodiment includes the power conversion section 10, the LC filter 11, the input voltage detection section 12 (not shown), the output current detection section 13, a control section 14A, and an output voltage detection section 15. The output voltage detection section 15 detects the output phase voltages Vu, Vv, and Vw.

The control section 14A includes the voltage command calculation section 30 (not shown), the PWM duty ratio calculation section 31 (not shown), and a commutation section 32A. The commutation section 32A includes the first and second commutation control sections 41 and 42 and a selection section 43A.

The selection section 43A includes the frequency determination section 44, the three-phase two-phase conversion section 45, a vector length ratio calculation section 47, a vector phase difference calculation section 48, a U phase determination section 50A, a V phase determination section 52A, a W phase determination section 54A, the U phase switch section 62, the V phase switch section 64, and the W phase switch section 66.

The three-phase two-phase conversion section 45 converts the output phase voltages Vu, Vv and Vw into $\alpha\beta$ components on two orthogonal axes of a fixed coordinate system to obtain an output voltage vector V$\alpha\beta$. The output voltage vector V$\alpha\beta$ has vector components, namely, a voltage component V$\alpha$ in the $\alpha$ axis direction, and a voltage component V$\beta$ in the $\beta$ axis direction. The three-phase two-phase conversion section 45 obtains the output voltage vector V$\alpha\beta$ using the following Formula (15), for example.

[Formula 13]

$$\begin{bmatrix} V_\alpha \\ V_\beta \end{bmatrix} = \sqrt{\frac{2}{3}} \cdot \begin{bmatrix} 1 & -1/2 & -1/2 \\ 0 & \sqrt{3}/2 & -\sqrt{3}/2 \end{bmatrix} \begin{bmatrix} Vu \\ Vv \\ Vw \end{bmatrix} \quad \cdots (15)$$

The vector length ratio calculation section 47 calculates a ratio HoVI (hereinafter referred to as vector length

ratio HoVl) of the vector length of the output voltage vector $V\alpha\beta$ with respect to the vector length of the output current vector $Io\alpha\beta$. The vector length ratio calculation section 47 calculates the vector length ratio HoVl using the following Formula (16), for example.

[Formula 14]

$$HoVI = \frac{\sqrt{Vu^2 + Vv^2 + Vw^2}}{\sqrt{Iu^2 + Iv^2 + Iw^2}} \qquad \cdots (16)$$

The vector phase difference calculation section 48 calculates a difference $\Delta\theta oVl$ (hereinafter referred to as vector phase difference $\Delta\theta oVl$) between a phase $\theta oV$ of the output voltage vector $V\alpha\beta$ and a phase $\theta oI$ of the output current vector $Io\alpha\beta$. The vector phase difference calculation section 48 obtains the vector phase difference $\Delta\theta oVl$ using the following Formula (17), for example.

[Formula 15]

$$\Delta\theta oVI = \tan^{-1}\left(\frac{V_\beta}{V_\alpha}\right) - \tan^{-1}\left(\frac{I_{o\beta}}{I_{o\alpha}}\right) \qquad \cdots (17)$$

Based on the vector length ratio HoVl and the vector phase difference $\Delta\theta oVl$, the U phase determination section 50A, the V phase determination section 52A, and the W phase determination section 54A deform the predetermines ranges RCx, RDx, and REx to generate predetermined ranges RCx', RDx', and REx'. The predetermined ranges RCx, RDx, and REx are set based on the parameters Pa, Pb, and Pc and based on the output current frequency $\omega o$, as in the U phase determination section 50, the V phase determination section 52, and the W phase determination section 54.

Specifically, in a case where HoVl > 1, the U phase determination section 50A, the V phase determination section 52A, and the W phase determination section 54A enlarge the predetermined ranges RCx, RDx, and REx in accordance with the vector length ratio HoVl. In a case where HoVl < 1, the U phase determination section 50A, the V phase determination section 52A, and the W phase determination section 54A diminish the predetermined ranges RCx, RDx, and REx in accordance with the vector length ratio HoVl. Then, the U phase determination section 50A, the V phase determination section 52A, and the W phase determination section 54A rotate the predetermined ranges RCx, RDx, and REx about the origin O by the vector phase difference $\Delta\theta oVl$. Thus, the predetermined ranges RCx', RDx', and REx' are generated.

When the output voltage vector $V\alpha\beta$ is outside the predetermined range RCx', the U phase determination section 50A outputs a High level of U phase selection signal Su. When the output voltage vector $V\alpha\beta$ is within the predetermined range RCx', the U phase determination section 50A outputs a Low level of U phase selection signal Su. Similarly to the U phase determination section 50A, the V phase determination section 52A compares the output voltage vector $V\alpha\beta$ with the predetermined range RDx', and outputs the V phase selection signal Sv in accordance with a result of the comparison. Similarly to the U phase determination section 50A, the W phase determination section 54A compares the output voltage vector $V\alpha\beta$ with the predetermined range REx', and outputs the W phase selection signal Sw in accordance with a result of the comparison.

Thus, the matrix converter 1A according to the second embodiment is capable of selecting the commutation control section to perform the commutation control based on the output voltage vector $V\alpha\beta$. This enables the matrix converter 1A to realize higher accuracy of the output voltage Vo than the accuracy realized by the matrix converter 1 when, for example, the output voltage detection section 15 is higher in detection accuracy than the output current detection section 13.

The matrix converter 1A obtains the output voltage vector $V\alpha\beta$ based on the output phase voltages Vu, Vv, and Vw. It is also possible to replace the three-phase two-phase conversion section 45 with such a three-phase two-phase conversion section that subjects voltage commands Vu*, Vv*, and Vw* to three-phase two-phase conversion so as to obtain the output voltage vector $V\alpha\beta$.

<<3. Third embodiment>>

Next, a matrix converter according to a third embodiment will be described. The matrix converter according to the third embodiment is different from the matrix converter 1 according to the first embodiment in that the commutation control section is selected based on the input voltage vector. The following description will mainly focus on those respects that are different from the matrix converter 1 according to the first embodiment, and the same reference numerals designate the same elements and functions throughout the first and third embodiments.

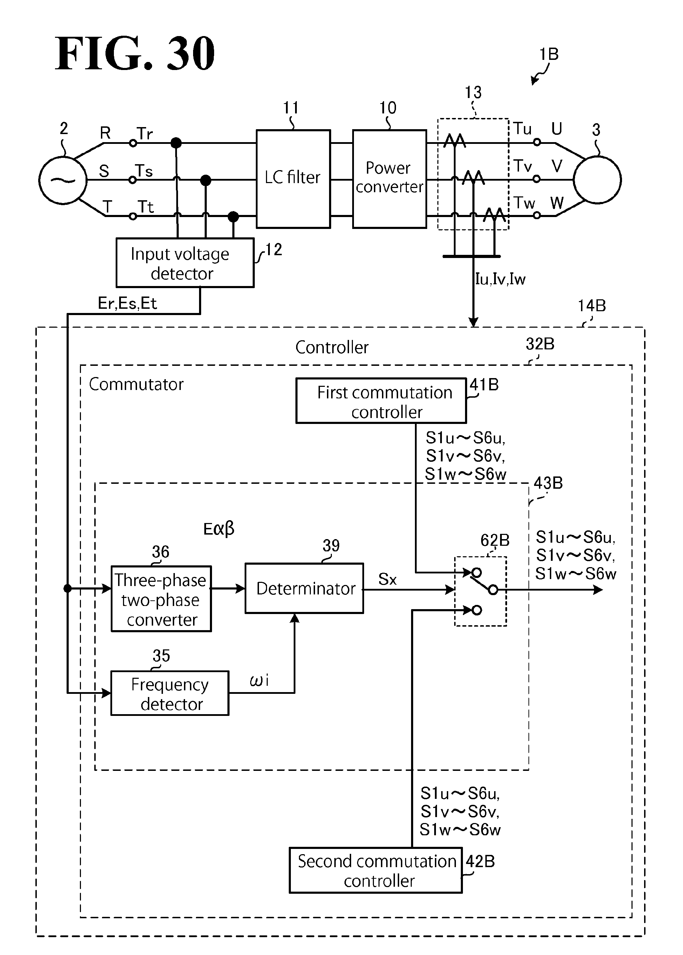

FIG. 30 is a diagram illustrating an exemplary configuration of a matrix converter 1B according to the third embodiment. As shown in FIG. 30, the matrix converter 1B according to the third embodiment includes the power conversion section 10, the LC filter 11, the input voltage detection section 12, the output current detection section 13, and a control section 14B.

The control section 14B includes the voltage command calculation section 30 (not shown), the PWM duty ratio calculation section 31 (not shown), and a commutation section 32B. The commutation section 32B includes a first commutation control section 41B, a second commutation control section 42B, and a selection section 43B.

The first commutation control section 41B performs the commutation control based on the first commutation. The first commutation is a method of commutation that has higher dependency on the relationship in magnitude among the input phase voltages Er, Es, and Et than the second commutation. An example of the first commutation is the 4-step voltage commutation described in the first embodiment. The first commutation is relatively long in terms of the inter-input phase short-circuiting time during the commutation operation when the relationship in magnitude among the input phase voltages Er, Es, and Et is incorrect.

The second commutation control section 42B performs the commutation control based on the second commutation. The second commutation is a method of commutation that has lower dependency on the relationship in magnitude among the input phase voltages Er, Es, and Et than the first commutation. An example of the second commutation is the 4-step current commutation described in the first embodiment. The second commutation is relatively short in terms of the inter-input phase short-circuiting time during the commutation operation when the relationship in magnitude among the input phase voltages Er, Es, and Et is incorrect.

The selection section 43B selects between the first and second commutation control sections 41B and 42B to perform the commutation control based on a phase $\theta i$ (hereinafter referred to as input voltage phase $\theta i$) of the input voltage Vi.

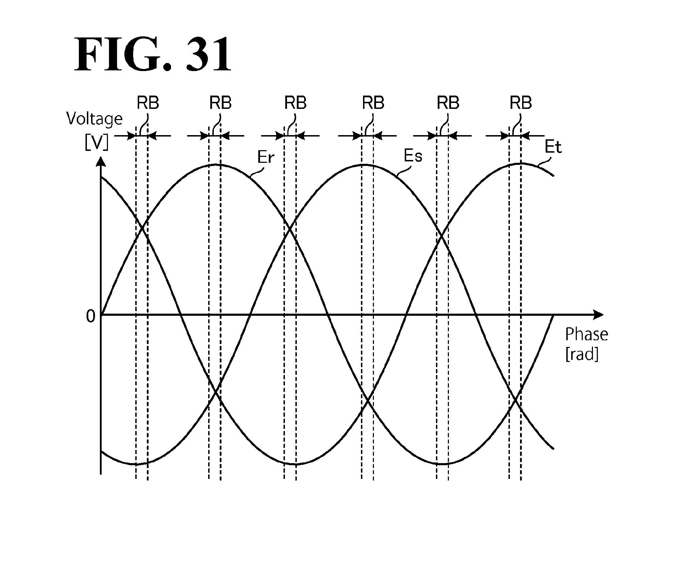

The first commutation has relatively high dependency on the relationship in magnitude among the input phase voltages Er, Es, and Et, and thus is susceptible to detection sensitivity, detection noise, and other factors associated with the input voltage detection section 12. FIG. 31 illustrates a relationship between the input voltage phase and a relationship in magnitude among the input phase voltages Er, Es, and Et for the respective R, S, and T phases. As shown in FIG. 31, a region RB is where the difference among the input phase voltages Er, Es, and Et is small. If, for example, a detection error of the input voltage occurs in the region RB, the relationship in magnitude among the input phase voltages Er, Es, and Et can go incorrect, causing inter-input phase short-circuiting. If inter-input phase short-circuiting occurs, the voltage between the input phases drops, resulting in degraded accuracy of the output voltage Vo.

In contrast, the second commutation has relatively low dependency on the relationship in magnitude among the input phase voltages Er, Es, and Et, and thus is less susceptible to detection sensitivity, detection noise, and other factors associated with the input voltage detection section 12 than the first commutation. In view of this, the selection section 43B selects the second commutation control section 42B in the region RB, where a commutation failure is possible with the first commutation, so that the second commutation control section 42B performs the commutation control based on the second commutation.

The selection section 43B determines whether a region is where a commutation failure is possible with the first commutation based on the input voltage phase $\theta i$, instead of on the absolute values of the input phase voltages Er, Es, and Et. Specifically, the selection section 43B selects the first commutation control section 41B when the input voltage phase $\theta i$ is outside a predetermined range, and selects the second commutation control section 42B when the input voltage phase $\theta i$ is within the predetermined range.

As shown in FIG. 30, the selection section 43B includes a frequency detection section 35, a three-phase two-phase conversion section 36, a determination section 39, and a switch 62B.

Based on the input phase voltages Er, Es, and Et detected by the input voltage detection section 12, the frequency detection section 35 detects a frequency $\omega i$ (hereinafter referred to as input voltage frequency $\omega i$) of the input voltage Vi. The frequency detection section 35 includes phase locked loop (PLL), for example.

The three-phase two-phase conversion section 36 converts the input phase voltages Er, Es, and Et into $\alpha\beta$ components on two orthogonal axes of a fixed coordinate system to obtain an input current vector $E\alpha\beta$. The input current vector $E\alpha\beta$ has vector components, namely, a voltage component $E\alpha$ in the $\alpha$ axis direction, and a voltage component $E\beta$ in the $\beta$ axis direction. The three-phase two-phase conversion section 36 obtains the input current vector $E\alpha\beta$ using the following Formula (18), for example.

[Formula 16]

$$\begin{bmatrix} E_{\alpha} \\ E_{\beta} \end{bmatrix} = \sqrt{\frac{2}{3}} \cdot \begin{bmatrix} 1 & -1/2 & -1/2 \\ 0 & \sqrt{3}/2 & -\sqrt{3}/2 \end{bmatrix} \begin{bmatrix} Er \\ Es \\ Et \end{bmatrix} \qquad \cdots (18)$$

The determination section 39 compares the input voltage vector $E\alpha\beta$ with a predetermined range RFx (x = 1 to 7). The predetermined range RFx is set based on reference directions, as in the case of the predetermined range RCx. The reference directions are directions in which the input voltage vector $E\alpha\beta$ is oriented in a case where differences Ers (= Er - Es), Est (= Es - Et), and Etr (= Et - Er) are zero. The differences Ers, Est, and Etr are relationships in magnitude among the input phase voltages Er, Es, and Et.

As in the case of the predetermined range RCx, the determination section 39 sets the predetermined range RFx based on the parameter Pa (= 1 to 7) and the parameter Pb (= 1 to 3), which are stored in an internal storage of the determination section 39. In a case where Pa = 1 and Pb = 3, the overcurrent value Ioc of the output current in Formula (3) is replaced with an overvoltage value Voc of the input voltage. In a case where Pa = 2, a vector length $|Io\alpha\beta|$ of the output current vector $Io\alpha\beta$ in Formula (4) is replaced with a vector length $|E\alpha\beta|$ of the input voltage vector $E\alpha\beta$.

When the input voltage vector $E\alpha\beta$ is outside the predetermined range RFx, the determination section 39 outputs a High level of selection signal Sx. When the input voltage vector $E\alpha\beta$ is within the predetermined range RFx, the determination section 39 outputs a Low level of selection signal Sx. The input voltage vector $E\alpha\beta$ is less susceptible to a detection error of the input voltage detection section 12 than the input phase voltages Er, Es, and Et are. Hence, the accuracy of determination as to commutation switching improves.

When the selection signal Sx is at High level, the switch 62B outputs the gate signals S1u to S6u, S1v to S6v, and S1w to S6w output from the first commutation control section 41B. When the selection signal Sx is at Low level, the switch 62B outputs the gate signals S1u to S6u, S1v to S6v, and S1w to S6w output from the second commutation control section 42B.

As has been described hereinbefore, the matrix converter 1B according to the third embodiment selects between the first and second commutation control sections 41B and 42B to perform the commutation control based on the input voltage vector $E\alpha\beta$. This improves the accuracy of commutation switching. With improved accuracy of commutation switching, voltage dropping between the input phases is eliminated or minimized. This, in turn, eliminates or minimizes failure of the power conversion section 10 without providing a switching element or a similar element that is large in size and capacity. This, as a result, promotes reduced size, higher efficiency, and lower cost of the matrix converter 1B.

The above description exemplifies the first commutation with the 4-step voltage commutation, and exemplifies the second commutation with the 4-step current commutation. This combination of the first and second commutations, however, should not be construed in a limiting sense.

Specifically, as in the first embodiment, it is possible to select the first and second commutations from among the plurality of commutations shown in FIG. 22. Here, a condition is that the first commutation has relatively high dependency on the relationship in magnitude among the input phase voltages Er, Es, and Et, while the second commutation has relatively low dependency on the relationship in magnitude among the input phase voltages Er, Es, and Et.

As in the first embodiment, the first commutation control section 41B stores the parameter Ps1 in an internal storage of the first commutation control section 41B. The parameter Ps1 indicates the type of the first commutation, so that the first commutation control section 41B performs the commutation control based on the commutation corresponding to the parameter Ps1. The second commutation control section 42B stores the parameter Ps2 in an internal storage of the second commutation control section 42B. The parameter Ps2 indicates the type of the second commutation, so that the second commutation control section 42B performs the commutation control based on the commutation corresponding to the parameter Ps2.

<<4. Fourth embodiment>>

Next, a matrix converter according to a fourth embodiment will be described. The matrix converter according to the fourth embodiment is different from the matrix converter 1B according to the third embodiment in that the commutation control section is selected based on the output current vector. The following description will mainly focus on those respects that are different from the matrix converter 1B according to the third embodiment, and the same reference numerals designate the same elements and functions throughout the third and fourth embodiments.

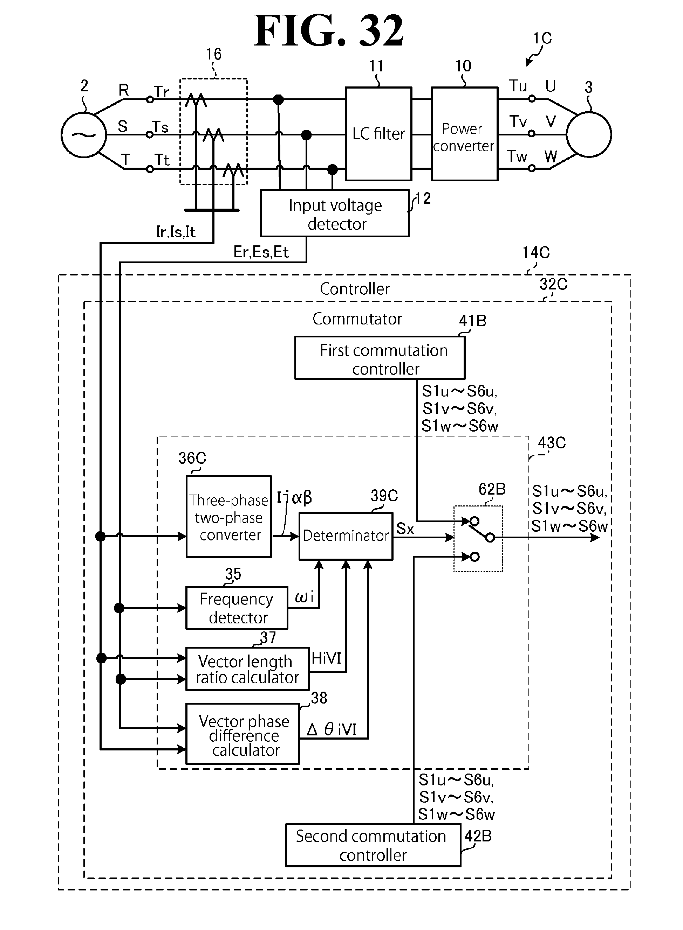

FIG. 32 is a diagram illustrating an exemplary configuration of a matrix converter 1C according to the fourth embodiment. As shown in FIG. 32, the matrix converter 1C according to the fourth embodiment includes the power conversion section 10, the LC filter 11, the input voltage detection section 12, the output current detection section 13 (not shown), a control section 14C, and an input current detection section 16. The input current detection section 16 detects instantaneous values Ir, Is, and It (hereinafter referred to as input phase currents Ir, Is, and It) of currents flowing between the R, S, and T phases of the AC power source 2 and the power conversion section 10.

The control section 14C includes the voltage command calculation section 30 (not shown), the PWM duty ratio calculation section 31 (not shown), and a commutation section 32C. The commutation section 32C includes the first and second commutation control sections 41B and 42B and a selection section 43C.

The selection section 43C includes the frequency detection section 35, a three-phase two-phase conversion section 36C, the vector length ratio calculation section 37, the vector phase difference calculation section 38, a determination section 39C, and the switch 62B.

The three-phase two-phase conversion section 36C converts the input phase currents Ir, Is, and It into $\alpha\beta$ components on two orthogonal axes of a fixed coordinate system to obtain an input current vector Ii$\alpha\beta$. The input current vector Ii$\alpha\beta$ has vector components, namely, a current component Ii$\alpha$ in the $\alpha$ axis direction, and a current component Ii$\beta$ in the $\beta$ axis direction.

The vector length ratio calculation section 37 calculates a ratio HiVI (hereinafter referred to as vector length ratio HiVI) of the vector length of the input current vector Ii$\alpha\beta$ with respect to the vector length of the input voltage vector E$\alpha\beta$. The vector phase difference calculation section 38 calculates a difference $\Delta\theta$iVI (hereinafter referred to as vector phase difference $\Delta\theta$iVI) between a phase $\theta$iV of the input voltage vector E$\alpha\beta$ and a phase $\theta$iI of the input current vector Ii$\alpha\beta$.

The determination section 39C deforms the predetermined range RFx based on the vector length ratio HiVI and the vector phase difference $\Delta\theta$iVI to generate a predetermined range RFx'. As in the determination section 39, the predetermined range RFx is set based on the parameters Pa, Pb, and Pc and based on the output current frequency $\omega$o.

Specifically, in a case where HiVI >1, the determination section 39C enlarges the predetermined range RFx in accordance with the vector length ratio HiVI. In a case where HiVI < 1, the determination section 39C diminishes the predetermined range RFx in accordance with the vector length ratio HiVI. Then, the determination section 39C rotates the predetermined range RFx about the origin O by the vector phase difference $\Delta\theta$iVI. Thus, the predetermined range RFx' is generated.

When the input current vector Ii$\alpha\beta$ is outside the predetermined range RFx', the determination section 39C outputs a High level of selection signal Sx. When the input current vector Ii$\alpha\beta$ is within the predetermined range RFx', the determination section 39C outputs a Low level of selection signal Sx.

As has been described hereinbefore, the matrix converter 1C according to the fourth embodiment selects the commutation control section to perform the commutation operation based on the input current vector Ii$\alpha\beta$. This enables the matrix converter 1C to realize higher accuracy of the output voltage Vo than the accuracy realized by the matrix converter 1 when, for example, the input current detection section 16 is higher in detection accuracy than the input voltage detection section 12.

Obviously, numerous modifications and variations of the present disclosure are possible in light of the above teachings. It is therefore to be understood that within the scope of the appended claims, the present disclosure may be practiced otherwise than as specifically described herein.

    1, 1A, 1B, 1C Matrix converter
    2 Three-phase AC power source
    3 Load
    10 Power conversion section
    11 LC filter
    12 Input voltage detection section
    13 Output current detection section
    14, 14A, 14B, 14C Control section
    15 Output voltage detection section
    30 Voltage command calculation section
    31 PWM duty ratio calculation section
    32, 32A, 32B, 32C Commutation section
    41, 41B First commutation control section
    42, 42B Second commutation control section
    43, 43A, 43B, 43C Selection section
    45, 46 Three-phase two-phase conversion section
    47 Vector length ratio calculation section

48 Vector phase difference calculation section
50, 50A U phase determination section
52, 52A V phase determination section
54, 54A W phase determination section
62 U phase switch section
62B Switch
64 V phase switch section
66 W phase switch section

**Claims**

1.  A matrix converter (1), **characterized by**:

    a power conversion section (10) comprising a plurality of bidirectional switches each having a conducting direction controllable by a plurality of switching elements, the plurality of bidirectional switches being disposed between a plurality of input terminals and a plurality of output terminals, the plurality of input terminals being respectively coupled to phases of an AC power source, the plurality of output terminals being respectively coupled to phases of a load; and
    a control section (14) configured to control the plurality of bidirectional switches, the control section (14) comprising:

    a first commutation control section (41) configured to perform commutation control based on a first commutation;
    a second commutation control section (42) configured to perform the commutation control based on a second commutation different from the first commutation; and
    a selection section (43) configured to select between the first commutation control section (41) and the second commutation control section (42) to perform the commutation control based on a vector of an output current or a vector of an output voltage from the power conversion section (10) or based on a vector of an input voltage or a vector of an input current from the AC power source to the power conversion section (10).

2.  The matrix converter (1) according to claim 1, wherein the selection section (43) is configured to select the first commutation control section (41) when the vector is outside a predetermined range, and configured to select the second commutation control section (42) when the vector is within the predetermined range.

3.  The matrix converter (1) according to claim 2, wherein the selection section (43) is configured to change the predetermined range in accordance with a frequency of the output current or a frequency of the input voltage.

4.  The matrix converter (1) according to claim 2 or 3,
    wherein the vector is a rotation vector having a starting point at an origin of a biaxial rectangular coordinate system, and
    wherein the control section (14) comprises
    a detection section configured to detect the output current or the output voltage, and
    a conversion section configured to convert a detection result of the detection section into the vector.

5.  The matrix converter (1) according to claim 4, wherein the predetermined range is inclined with respect to a reference direction as a direction of the vector in a case where a value of the output current is zero.

6.  The matrix converter (1) according to claim 5, wherein the predetermined range comprises a range that spreads in the reference direction from the origin by a predetermined angle and is inclined with respect to the reference direction.

7.  The matrix converter (1) according to claim 5 or 6, wherein the predetermined range comprises a range that has a predetermined width, extends in the reference direction from the origin while maintaining the predetermined width, and is inclined with respect to the reference direction.

8.  The matrix converter (1) according to claim 4, wherein the predetermined range comprises a range that spreads in the reference direction from the origin by a predetermined angle, the reference direction being a direction in which the vector is oriented in a case where a value of the output current is zero or a value of the input voltage is zero.

9.  The matrix converter (1) according to claim 8, wherein the predetermined range comprises a range that has a predetermined width and extends in the reference direction while maintaining the predetermined width.

10. The matrix converter (1) according to any one of claims 5, 6, 8, and 9, wherein the predetermined range comprises a range within a predetermined length from the origin.

11. The matrix converter (1) according to any one of claims 1 to 10, wherein the selection section (43) is configured to select between the first commutation control section (41) and the second commutation control section (42) to perform the commutation control for each individual phase among the phases of the load.

FIG. 1

# FIG. 2

# FIG. 3

# FIG. 4

# FIG. 5

# FIG. 6A

$Iu > 0$

# FIG. 6B

$Iu < 0$

# FIG. 7

$Iu > 0$

# FIG. 8

# FIG. 9

# FIG. 10

# FIG. 11

**FIG. 12**

**FIG. 13**

## FIG. 14A

## FIG. 14B

## FIG. 15

## FIG. 16

FIG. 17

FIG. 18

**FIG. 19**

**FIG. 20**

# FIG. 21

RC7

$\beta$

$\Delta\theta1$

D1

$\alpha$

O

$\Delta\theta3$

# FIG. 22

Higher dependency on current polarity

| 1-Step current commutation | 2-Step current commutation |
|---|---|

| 4-Step current commutation |
|---|

| 3-Step current commutation |
|---|

| 3-Step voltage and current commutation |
|---|

| 3-Step voltage commutation |
|---|

| 4-Step voltage commutation | 2-Step voltage commutation |
|---|---|

Lower dependency on current polarity

# FIG. 23A    *Iu > 0*

# FIG. 23B    *Iu < 0*

# FIG. 24A      _Iu > 0_

# FIG. 24B      _Iu < 0_

# FIG. 25A   $Io > 0$

# FIG. 25B   $Io < 0$

# FIG. 26A $\quad \underline{Io > 0}$

# FIG. 26B $\quad \underline{Io < 0}$

FIG. 27A   *Io > 0*

FIG. 27B   *Io < 0*

# FIG. 28

# FIG. 29

# FIG. 30

# FIG. 31

# FIG. 32

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003333851 A
- JP 2008048550 A
- JP 2012239265 A